# EUROPÄISCHE PATENTSCHRIFT

(11) **EP 3 956 115 B1**
(45) Veröffentlichungstag und Bekanntmachung des Hinweises auf die Patenterteilung: **24.05.2023**
(21) Anmeldenummer: 20719620.5
(22) Anmeldetag: 16.04.2020
(51) Int. Cl.: B26D 7/14, A22C 17/00, B26D 7/08, B26D 7/06, B26D 7/02

(54) **SCHNEIDEMASCHINE SOWIE VERFAHREN ZUM AUFSCHNEIDEN EINES LAIBES IN SCHEIBEN**
CUTTING MACHINE AND METHOD FOR CUTTING A LOAF INTO SLICES
MACHINE À DÉCOUPER DESTINÉE À DÉCOUPER UNE MEULE EN TRANCHES

(30) Priorität: 16.04.2019 DE 102019110026
(43) Veröffentlichungstag der Anmeldung: 23.02.2022
(73) Patentinhaber: TVI Entwicklung und Produktion GmbH, 83737 Irschenberg (DE)
(72) Erfinder: VÖLKL, Thomas, 83052 Bruckmühl (DE); ROTHENAICHNER, Dominik, 83052 Bruckmühl (DE)
(74) Vertreter: Weickmann & Weickmann PartmbB
(86) Internationale Anmeldenummer: PCT/EP2020/060684
(87) Internationale Veröffentlichungsnummer: WO 2020/212475

(56) Entgegenhaltungen:
- WO-A1-2017/186828

## Beschreibung

### I. Anwendungsgebiet

Schneidemaschinen zum Aufschneiden von Stücken aus elastischem Material in Scheiben werden vor allem in der Lebensmittel-Industrie benötigt.

### II. Technischer Hintergrund

Das aufzuschneidende Material kann insbesondere Fleisch oder Fisch oder ein anderes Lebensmittel sein.

Dabei ist zu unterscheiden zwischen
- einerseits länglichen Stücken mit über die Länge gleichbleibenden Querschnitt, so genannten Kalibern oder Strängen, in denen etwa Wurst oder Käse hergestellt wird
   und
- andererseits länglichen Stücken, bei denen sich der Querschnitt über deren Länge ändert, so genannten Laiben, wie etwa Stücke aus gewachsenem Fleisch.

Denn um daraus Scheiben etwa gleichen Volumens und damit gleichen Gewichts zu erzeugen, muss ein gleichmäßiges Kaliber lediglich immer um die gleiche Vorschubstrecke für das Abtrennen einer immer gleich dicken Scheibe vorwärts gefahren werden, wofür sogenannte Slicer bekannt sind, die die Scheiben mit einer sehr hohen Taktfrequenz abtrennen.

Bei ungleichmäßigen Laiben wird dies im Stand der Technik erreicht, indem der Laib zunächst in einem Formrohr zu einem über die Länge gleichbleibendem inneren Querschnitt verpresst wird, dass er diesen Formrohr-Querschnitt möglichst vollständig ausfüllt, sodass der Laib in diesem verpressten Zustand einen über die Länge gleichen und bekannten Querschnitt, auch in seinen Endbereichen, besitzt.

Dann können durch Vorgeben der Scheiben-Dicke und Vorwärtsschieben aus dem Formrohr heraus und Abtrennen dieses Überstandes um jeweils eine solche Scheiben-Dicke etwa gewichtsgenaue Scheiben abgetrennt werden.

Dabei besteht das Problem, dass die Laibe zwar innerhalb einer Charge ähnliche Abmessungen aufweisen können, sich diese Abmessungen von Charge zu Charge jedoch sehr stark ändern können. Noch stärker können sich die Abmessungen abhängig vom Herkunftsort des Fleischstückes am Tier oder auch der Art des Tieres unterscheiden.

Deshalb ist es bekannt, dass das Formrohr einen in mindestens einer Querrichtung veränderbaren Querschnitt aufweist, damit Laibe mit unterschiedlichem Querschnitt einbringen und verpressen zu können.

Hierfür kann ein in eine Formrohr-Rinne von deren offener Längsseite her einfahrbarer Querpress-Stempel verwendet werden zusätzlich zu dem in Längsrichtung in das dann umfänglich geschlossene Formrohr einfahrbaren Längspress-Stempel.

Ferner ist es bekannt, in einem Formrohr-Revolver mehrere hinsichtlich ihres Querschnittes unterschiedlich große und/oder unterschiedlich geformte Formrohre vorzusehen, die wahlweise benutzt werden können, und die darüber hinaus bei je zwei gleichen Formrohren zusätzlich ein Beladen des einen der beiden gleichen Formrohre ermöglicht, während aus dem anderen Formrohr heraus momentan Scheiben aufgeschnitten werden.

Das Verpressen nicht nur in Längsrichtung sondern auch in Querrichtung des Laibes an einem Formrohr-Revolver mit mehreren Formrohren ist jedoch schwierig zu realisieren.

Wenn zusätzlich für einen variablen Einsatz der Schneidemaschine auch Material mit einem starren, nicht elastischen, insbesondere in Längsrichtung verlaufenden, Anteil, wie etwa ein Fleischstück mit Knochen, z.B. ein Kotelett-Strang, aufschneidbar sein soll, wird dafür einerseits zwingend eine Quer-Verpressung benötigt, da ein solcher Kotelett-Strang sich in Längsrichtung nicht verpressen lässt, und es wird zusätzlich ein gezahntes Messer benötigt - im Gegensatz zu einem ungezahnten Messer bei knochenfreiem Material - um den Knochen zu zersägen.

Die WO 2017/186828 A1 offenbart eine solche gattungsgemäße Schneidemaschine, allerdings enthält diese keine mehreren Querpress-Stempel mit unterschiedlicher Breite, welche in den offenen Querschnitt einer Formrohr-Rinne eingefahren werden können.

### III. Darstellung der Erfindung

### a) Technische Aufgabe

Es ist daher die Aufgabe gemäß der Erfindung, eine gattungsgemäße Schneidemaschine so weiterzubilden, dass sie sehr variabel, auch zum Aufschneiden von knochigen Material sowie für andere Sonderfälle, verwendet werden kann trotz einfachem und kostengünstigen Aufbau, sowie ein Verfahren für ihren Betrieb.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Diese Aufgabe wird bei einer gattungsgemäßen Schneidemaschine mit einem Formrohr dadurch gelöst, dass der Rinnen-Hohlraum eine veränderbare Breite besitzt und mehrere Querpress-Stempel mit unterschiedlicher Breite vorhanden sind, die in die verschiedenen einstellbaren Breiten der Formrohr-Rinne hinein passen.

Diese Querpress-Stempel sind mittels eines Querpress-Antriebes in einer ersten Querrichtung, der Querpress-Richtung, in die offene Längsseite der Formrohr-Rinne hinein verlagerbar.

Durch die nur eine vorhandene Formrohr-Rinne wird gegenüber einem Formrohr mit mehreren Formrohr-Öffnungen der Platzbedarf und damit die Größe der Maschine verringert und auch das Reinigen erleichtert, da der Querpress-Stempel zwischen dem Aufschneiden verschiedener Laibe ohnehin vollständig in Querrichtung aus der Formrohr-Rinne herausbewegt wird, und in diesem Zustand auch die Reinigung sowohl der Formrohr-Rinne als auch des Querpress-Stempels leicht und schnell möglich ist.

Die Formrohr-Rinne hat vorzugsweise zwei parallel zueinander verlaufende und in ihrem freien Querabstand veränderbare Seitenwände, wobei die parallel dazu in der Mitte zwischen den Rinnen-Seitenflächen dieser beiden Seitenwände verlaufende Ebene als Längsmittelebene der Formrohr-Rinne und bei eingesetztem Querpress-Stempel des Formrohres bezeichnet wird.

Der Boden der Formrohr-Rinne muss nicht zwingend - in dessen Längsrichtung betrachtet - lotrecht zu den Seitenflächen verlaufen, sondern kann hierzu auch schräg stehen.

Zur Veränderung der Breite des Rinnen-Hohlraumes kann auch nur eine der Seitenwände der Formrohr-Rinne in ihrem Abstand zur gegenüberliegenden Seitenwand verlagerbar sein, vorzugsweise entlang der Oberseite des Bodens der Formrohr-Rinne.

Bevorzugt sind beide Seitenwände der Formrohr-Rinne gegensynchron in Breitenrichtung, der zweiten Querrichtung der Formrohr-Rinne, gesteuert verlagerbar auf die Längsmittelebene zu und von dieser weg und/oder die beiden Seitenwände sind immer spiegelbildlich zur Längsmittelebene angeordnet.

Letzteres hat den Vorteil, dass der in die Formrohr-Rinne einzufahrende Querpress-Stempel immer an der gleichen Querposition in dieser zweiten Querrichtung eingefahren werden kann und diese Querposition mit Veränderung der Breite der Formrohr-Rinne nicht geändert werden muss.

Die in die Rinnen-Öffnung hineinweisende Pressfläche des Querpress-Stempels ist somit Bestandteil der dadurch mehrteiligen Formrohr-Umfangswand, die den variablen freien Querschnitt des Formrohres umgibt.

Da sich der Querschnitt des Formrohres abhängig von der eingestellten Breite der Formrohr-Rinne und der Position des Querpress-Stempels in der Querpress-Richtung ändert, muss der verwendete Längspress-Stempel hieran anpassbar sein, also entweder in beide Querrichtungen in seiner Erstreckung variabel sein oder - was erfindungsgemäß bevorzugt ist - es sind mehrere Längspress-Stempel vorhanden, deren Breiten den festgelegten einstellbaren Breiten der Formrohr-Rinne entsprechen, und die in ihrer Länge, also in Querpress-Richtung, entweder variabel sind oder die einzelnen Längs-Stempel in dieser Dimension ebenfalls verschiedene, feste Längen aufweisen, wobei dann aber der Querpress-Stempel nur in definierten Querpress-Stellungen für das Aufschneiden angehalten werden darf, also positionsgesteuert betrieben werden muss.

Sofern mehrere Längspress-Stempel vorhanden sind, müssen diese mit dem Längspress-Antrieb - der nur einmal vorhanden ist - auf einfache Art und Weise koppelbar und entkoppelbar sein.

Das Gleiche gilt für die mehreren vorhandenen Querpress-Stempel sowie den einzigen vorhandenen Querpress-Antrieb.

Dabei sind vorzugsweise die Querpress-Stempel an oder in einem drehbaren Querstempel-Revolver und / oder die Längspress-Stempel in oder an einem Längs-Stempelrevolver angeordnet, wobei einer oder vorzugsweise beide davon um eine zur axialen Richtung parallele, vorzugsweise hierzu beabstandete Drehachse, genauer gesagt Schaltachse, gesteuert verdrehbar sind.

Diejenige Umfangs-Position jedes dieser beiden Revolver, die mit dem Formrohr fluchtet, wird als Schneidposition bezeichnet.

Um den benötigten - der eingestellten Breite der Formrohr-Rinne entsprechenden - Querpress-Stempel in diese Schneidposition zu bringen, die einerseits zum Ankuppeln an den Querpress-Antrieb und andererseits zum Einfahren in die offenen Seite der Formrohr-Rinne benötigt wird, gibt es mehrere Möglichkeiten:
Die erste Möglichkeit besteht erfindungsgemäß darin, dass der Querstempel-Revolver in axialer Richtung versetzt außerhalb des axialen Längenbereiches der Formrohr-Rinne angeordnet ist, vorzugsweise in axialer Richtung über der Formrohr-Rinne.

In diesem Fall weist der Querpress-Antrieb mindestens eine in Längsrichtung verlaufende Führung auf, entlang der der gewünschte Querpress-Stempel in axialer Richtung in die Funktionsstellung gebracht, insbesondere geschoben oder gezogen wird, und die den Querpress-Stempel in den Querrichtungen zur Einschiebrichtung vorzugsweise formschlüssig am Querpress-Antrieb hält.

Der Querstempel-Revolver weist dagegen für jeden an ihm befestigten Querpress-Stempel jeweils mindestens eine solche Führung auf, sodass nach einem Drehen des Querstempel-Revolvers in die Lage, in der der gewünschte Querpress-Stempel mit der Längsführung des Querpress-Antriebes fluchtet - der Schneidposition - dieser Querpress-Stempel entlang der Führung des Querstempel-Revolvers verfahren und auf oder in die Führung des Querpress-Antriebes verfahren werden kann bis in die Ausgangsstellung, in der er gegenüber dem Querpress-Antrieb, insbesondere hinsichtlich seiner axialer Position gesichert wird, vorzugsweise formschlüssig gesichert wird.

Diese Sicherung erfolgt vorzugsweise mithilfe des Querpress-Antriebes, beispielsweise indem vom Querpress-Antrieb aus ein Verriegelungszapfen gesteuert zwischen einer verriegelten und einer entriegelten Stellung in eine entsprechende Verriegelungs-Vertiefung des Querpress-Stempels einfahrbar oder aus dieser ausfahrbar ist. Dieser Verriegelungszapfen kann im Inneren einer hohl ausgebildeten Schubstange des Querpress-Antriebes untergebracht sein.

Dabei kann der Querpress -Stempel in axialer Richtung beanstandet auch mehr als eine solche Verriegelungs-Vertiefung aufweisen, sodass der Querpress-Stempel außer in der normalen Lage auch in einer demgegenüber in axialer Richtung angehobenen Lage verriegelt werden kann.

Da auch die Formrohr-Rinne zwei entsprechende verschiedene, in axialer Richtung unterschiedliche, solche Lagen, also eine normale Lage und eine in axialer Richtung angehobene Lage, einnehmen kann, kann in der angehobenen Lage ein später beschriebenes Würfel-Gatter unter dem unteren Ende des Formrohres angesetzt werden, wenn sich sowohl der am Querpress-Antrieb befestigte Querpress-Stempel als auch die Formrohr-Rinne in der angehobenen Lage befinden.

Dieses Verschieben des in der Schneidposition befindlichen Querpress-Stempels von der Führung am Querstempel-Revolver auf oder in die Führung des Querpress-Antriebes und zurück erfolgt vorzugsweise mittels der Schubstange, die Bestandteil des Längspress-Antriebes ist und somit in Längsrichtung, der axialen Richtung mittels eines Mitnehmers, der an der Schubstange befestigt ist, vorzugsweise der gleichen Schubstange, die ansonsten einen Längspress-Stempel hält und vorwärts schiebt.

Dieser Mitnehmer kann mit dem in der Schneidposition befindlichen Querpress-Stempel gekoppelt oder entkoppelt werden. Dadurch kann der benötigte Querpress-Stempel auf einfache Art und Weise in die Ausgangsstellung an oder in der Führung des Querpress-Antriebes gebracht werden, um mit diesem gekoppelt zu werden.

In dieser Ausgangsstellung wird der Querpress-Stempel gegenüber dem Querpress-Antrieb verriegelt, insbesondere mit Hilfe des Querpress-Antriebes, vorzugsweise indem ein Verrieglungszapfen mittels des Querpress-Antriebes gesteuert zwischen einer gegenüber dem Querpress-Stempel am Querpress-Antrieb verriegelnden oder entriegelnden Stellung verfahrbar ist.

Bei der zweiten Möglichkeit kann der Querstempel-Revolver auch in axialer Richtung in dem Längenbereich der Formrohr-Rinne angeordnet sein.

Dann ist der Querstempel-Revolver in seinem Inneren zumindest insoweit hohl ausgebildet, dass die Formrohr-Rinne darin Platz findet. Vorzugsweise umfasst der Querstempel-Revolver zwei axial beabstandete und um die Schaltachse drehbare Halteringe, zwischen denen in axialer Richtung die Querpress-Stempel angeordnet sind, indem sie mit jeweils einem ihrer Endbereiche lösbar an einem der Halteringe in definierter Umfangsposition befestigt sind.

Sie befinden sich damit in axialer Richtung bereits in der richtigen Stellung für das Koppeln mit dem Querpress-Antrieb, und es muss lediglich durch Drehen des Querpress-Revolvers um die Schaltachse noch der gewünschte Querpress-Stempel in die Schneidposition gebracht werden.

Anschließend kann der Querpress-Antrieb durch Ausfahren in Querpress-Richtung den Querpress-Stempel an seiner Rückseite kontaktieren und vorzugsweise verriegeln und durch weiteres Vorwärtsfahren in Richtung Rinnen-Hohlraum aus dem Querstempel-Revolver herauslösen und in den Rinnen-Hohlraum einfahren.

Beim Zurückfahren kann der Querpress-Stempel beim Erreichen seiner Halteposition, insbesondere in den Halteringen des Querstempel-Revolvers, an dortigen Anschlägen zurückgehalten werden, wodurch sich die Verbindung zum Querpress-Antrieb - gegebenenfalls nach Lösen der vorhandenen Verriegelung - von selbst löst.

Hierfür sind magnetische Anschläge und / oder Halterungen am Querstempel-Revolver und / oder am Querpress-Antrieb für eine Fixierung sehr einfach benutzbar.

Diese 2. Möglichkeit benötigt keinen Mitnehmer für die Schubstange des Längspress-Antriebes und verkürzt die für das Ankoppeln eines neuen Querpress-Stempels benötigte Zeit. Der Nachteil ist die schlechtere Zugänglichkeit der Formrohr-Rinne für das Beladen mit einem neuen aufzuschneidenden Laib, wofür jedoch an einer Stelle des Umfanges des Querstempel-Revolvers eine Lücke vorgesehen werden könnte, durch die hindurch - bei entsprechender Drehlage des Querstempel-Revolvers - in radialer Richtung die Formrohr-Rinne zugänglich wäre .

Der Längspress-Antrieb und/oder Querpress-Antrieb und/oder das Messer sind in ihrer Bewegung vorzugsweise kraftgesteuert, insbesondere ist hiervon der Längspress-Antrieb und/oder der Querpress-Antrieb kraftgesteuert. Der Querpress-Antrieb kann nur dann kraftgesteuert ausgebildet werden, wenn Längspress-Stempel verwendet werden, deren Erstreckung in der Querpress-Richtung variabel ist.

Um bei einem elastischen Laib eine vollständige Anlage des Außenumfanges des Laibes am Innenumfang des Formrohres zu erreichen, muss zumindest entweder das Längs-Verpressen oder das Quer-Verpressen kraftgesteuert durchgeführt werden.

Aufgrund der großen Unterschiede in der Länge der Laibe ist dies beim Längs-Verpressen quasi unverzichtbar.

Da somit der Längspress-Stempel ohnehin kein einstückiges, fixes Bauteil sein kann, sondern zumindest in Richtung der Quer-Verpressung eine, zumindest stufenweise, besser stufenlos variable, Erstreckung aufweisen muss, ist es dann flexibler, auch den Querpress-Stempel kraftgesteuert zu beaufschlagen.

Der Längspress-Antrieb und/oder Querpress-Antrieb können als Arbeitszylinder-Einheit - pneumatisch oder hydraulisch betrieben - ausgebildet sein, oder alternativ durch eine Gewindespindel sowie eine darauf verschraubbare Spindelmutter realisiert sein, wobei die Gewindespindel vorzugsweise als Kugel-Rollspindel ausgebildet ist. Mit Hilfe der Gewindespindel und Spindelmutter werden eine oder mehrere Schubstangen in der jeweiligen Pressrichtung verfahren, wobei die Schubstange vorzugsweise an wenigstens einer hierzu parallel verlaufenden Führungsstange, vorzugsweise zwischen zwei hierzu parallel verlaufenden Führungsstangen, angeordnet und geführt ist, um die Seitenabweichungen möglichst gering zu halten.

Vor allem für die Zwecke einer einfachen Reinigung der Schneidemaschine, aber auch um die Antriebe zu schützen, ist der Längspress-Antrieb einerseits und/oder der Querpress-Antrieb andererseits, letzterer vorzugsweise zusammen mit dem Messer-Antrieb, in jeweils einer im Wesentlichen geschlossenen, vorzugsweise wasserdichten, Antriebs-Box angeordnet, die lediglich den benötigten - vorzugsweise abgedichteten - Durchlass für das jeweilige bewegte Funktionselement, bei den Press-Antrieben beispielsweise die entsprechende Schubstange, aufweisen, an deren vorderen Ende sich die Kupplung zum Ankuppeln des jeweiligen Pressstempels befindet.

Beim Querpress-Antrieb können auch zwei parallel zueinander verlaufende Schubstangen vorhandenen sein, die synchron zueinander bewegt werden und an zueinander beabstandeten Positionen an dem Querpress-Stempel angreifen, der eine erheblich größere Pressfläche besitzt als der Längspress-Stempel, wodurch ein Verkippen des Querpress-Stempels und Verkanten verhindert werden kann.

Durch die Quer-Verpressung, insbesondere in beiden Querrichtungen, können Laibe, die in Längsrichtung nicht elastisch sind aufgrund eines z.B. Knochenanteils, zumindest hinsichtlich ihres elastischen Anteiles in Querrichtung so verpresst werden, dass sich zumindest der elastische Anteil an die Innenwandung der Formrohr-Öffnung anlegt.

Die Schneidemaschine umfasst ferner eine Schneidvorrichtung mit einem Messer.

Dabei kann es sich um ein linear bewegliches Messer handeln, insbesondere ein endloses bandförmiges Messer einer Bandsäge oder ein endliches plattenförmiges Messer, welches intermittierend, insbesondere in Richtung seiner Schneidkante, hin und her bewegt wird.

Es kann sich bevorzugt um ein rotierendes Messer handeln, das insbesondere um eine parallel zur axialen Richtung verlaufende Messerachse rotiert und insbesondere einen kreisförmigen Umfang aufweist, der als Schneide ausgebildet ist, die eine gezahnte oder ungezahnte Schneide sein kann.

Falls es sich um ein kreisförmiges Messer handelt - also der Vorschub in den Laib hinein nicht durch die Messerform zur Verfügung gestellt wird wie bei einem Messer mit spiralförmiger, außen liegender Schneidkante, etwa einem Sichel-Messer - wird zum Abtrennen einer Scheibe die Messerachse relativ zum Formrohr bewegt in vorzugsweise radialer Richtung.

Dabei ist der Bewegungsweg so gewählt, dass die Schneidkante des Messers dabei den gesamten Querschnitt der Formrohr-Öffnung überstreichen kann, in axialer Richtung vorzugsweise unmittelbar vor dem Schneidende des Formrohres.

Zu diesem Zweck kann die Messerachse an einer Schwinge befestigt sein und diese eine Schwenkbewegung vollziehen, die auch einen radialen Anteil bzgl. der Längsrichtung der Formrohr-Rinne besitzt, oder die Messerachse ist an einem Schlitten angeordnet, der linear verfahren werden kann in einer Richtung, die eine radiale Komponente bzgl. der Längsrichtung der Formrohr-Rinne enthält.

Bei dem rotierenden Messer wird beim Schneiden von harten Anteilen im Laib wie etwa einem Knochen die Eindring-Geschwindigkeit des Messers an dem harten Teil zwangsläufig zurückgehen und mit zunehmender Kraftbeaufschlagung die Drehzahl des Messers vorzugsweise erhöht, wobei die Kraftbeaufschlagung vorzugsweise nach oben begrenzt werden sollte.

Bevorzugt ist deshalb die Bewegung der Messerachse positionsgesteuert, um sicherzustellen, dass die Schneidkante des Messers den gesamten Querschnitt dieses Formrohres überstreicht und somit den Laib durchtrennt.

Um das Messer schnell wechseln zu können, beispielsweise um für das Schneiden eines knochigen Fleischstückes ein gezahntes Messer einsetzen zu können, weist die Schneidvorrichtung einen Schnellverschluss für das Messer auf, der es insbesondere ermöglicht, das Messer ohne Werkzeug und/oder in weniger als 30 Sekunden zu wechseln.

Insbesondere weist der Schnellverschluss eine Drucktaste im Zentrum des Messers, also auf der Messerachse, auf, die betätigt werden muss, um das Messer
- nachdem es mittels einer vorzugsweise radialen Bewegung vollständig aus dem Querschnitt des Formrohres herausbewegt wurde in eine Wechselposition
- von der Messerachse axial abzuziehen und ein neues Messer aufzustecken und insbesondere zu verrasten.

Da für jede Breite der Formrohr-Rinne ein anderer Längspress-Stempel benötigt wird, umfasst die Schneidemaschine mehrere Längspress-Stempel, die in einem Längsstempel-Magazin, vorzugsweise einem Längsstempel-Revolver, vorgehalten werden.

Mit Hilfe dieses Längsstempel-Magazins kann der benötigte Längspress-Stempel in axialer Richtung hinter dem Belade-Ende des Formrohr-Revolvers in Schneidposition gebracht werden, wofür eben derjenige Längspress-Stempel gewählt wird, dessen Breite in die eingestellte oder noch einzustellende Breite der Formrohr-Rinne passt.

Die Drehbewegung des Längsstempel-Revolvers kann mit der des Querstempel-Revolvers gekoppelt, insbesondere mechanisch gekoppelt, sein, um automatisch immer den richtigen Längspress-Stempel in Schneidposition zur Verfügung zu haben, der dann automatisch mit dem axial herannahenden Längspress-Antrieb gekoppelt wird und von diesem axial in die Öffnung der Formrohr-Rinne eingefahren wird und sich hierfür automatisch aus dem Längsstempel-Revolver löst.

Analog wird beim vollständigen Zurückziehen des Längspress-Stempels aus dem Formrohr der Längspress-Stempel automatisch wieder an den Längs-Stempelrevolver in eine dortige Aufnahme-Öffnung übergeben und in dieser befestigt und andererseits vom Längspress-Antrieb gelöst.

### (Anschlagplatte)

Vorzugsweise ist an der erfindungsgemäßen Schneidemaschine ebenfalls ein - an sich bekanntes - Anschlagelement für das vordere Ende des aus dem Formrohr heraus geschobenen Laibes vorhanden, insbesondere ausgebildet als Anschlagplatte, und natürlich in axialer Richtung bzgl. der Messerebene auf der dem Schneidende des Formrohres gegenüber liegenden Seite.

Zur Festlegung der Scheibendicke wird dieses Anschlagelement, insbesondere die Anschlagplatte, wie üblich in ihrem axialen Abstand zur Schneideebene des Messers eingestellt.

Erfindungsgemäß ist die Anschlagplatte mit der Messerachse gekoppelt, insbesondere mechanisch gekoppelt, und der Abstand zwischen der Messerachse und der Funktionskante der Anschlagplatte, welche der Messerachse zugewandt ist, insbesondere einstellbar. Die Anschlagplatte ist somit wie die Messerachse bewegbar, insbesondere synchron zusammen mit dieser bewegbar, rotiert jedoch nicht mit dem Messer um die Messerachse.

Vorzugsweise ist die Anschlagplatte gegenüber der Schneidvorrichtung oder dem Grundgestell der Schneidemaschine abgestützt, und insbesondere entlang von Führungen geführt, entlang denen sich das Anschlagelement bei Verändern der Position der Messerachse sowohl beim Aufschneiden von Scheiben als auch beim Verlagern der Messerachse in eine Wechselposition für das Messer - die durchaus eine Position des Bewegungsweges beim Aufschneiden von Scheiben sein kann - geführt ist.

Das Anschlagelement kann von der Messerachse und/oder dem Messer auch entkoppelbar sein, was insbesondere automatisch geschehen kann, sobald das Messer oder die Messerachse eine vorgegebene Position auf ihrem Bewegungsweg erreicht, beispielsweise sobald das Messer keine Überschneidung mit dem Querschnitt der Formrohr-Öffnung in der Schneidposition mehr besitzt oder die Messerachse in Richtung Wechselposition bewegt wird oder diese Wechselposition erreicht hat.

Ferner kann das Anschlagelement) relativ zum Messer - außer in axialer Richtung - auch in seinem radialen Abstand zur Messerachse verstellbar sein, insbesondere indem die Anschlagplatte relativ zum Messer verlagert war, insbesondere verschwenkbar, angeordnet ist unter Beibehaltung der Parallelität von Messerebene zur Anschlag-Ebene.

### (Würfelgatter)

Um auch Würfel - beispielsweise für Gulasch oder Schaschlik - schneiden zu können, ist nahe des Schneidendes des Formrohres ein Würfel-Gatter mit sich kreuzenden, mit ihren Schneiden meist in einer Radialebene des Formrohr--Innenraumes liegenden, geraden Gatter-Messern bekannt, welches in eine meist zum Außenumfang hin offene Ausnehmung des Formrohres eingeschoben werden kann.

Bei Nichtbedarf wird dann die Ausnehmung durch einen Platzhalter nach außen hin dicht verschlossen, der bei vollständig eingeschobenem Platzhalter eine Durchgangsöffnung entsprechend und fluchtend mit dem Rest der Formrohr-Öffnung aufweist.

Allerdings erfordert ein solches Würfel-Gatter meist, dass stromaufwärts des Würfel-Gatters eine Zwischenplatte, deren Hauptebene quer, insbesondere lotrecht, zur axialen Richtung des Formrohres liegt, in den freien Formrohr-Querschnitt einbringbar ist und die Formrohr-Öffnung zumindest in der Schneidposition überdeckt, um beim Längs-Verpressen als Pressanschlag für den längs zu verpressenden Laib zu dienen.

Ein Längs-Verpressen gegen das Würfel-Gatter ist meist nicht möglich, da dieses der Belastung meist nicht standhält.

Erfindungsgemäß wird ein solches Würfel-Gatter bei Bedarf nicht in eine Ausnehmung im Längsbereich des Formrohres eingeschoben, sondern als Ansatzteil an das Schneidende des Formrohres angesetzt.

Zu diesem Zweck ist sowohl die Formrohr-Rinne, als auch der in Funktionsstellung befindliche Querpress-Stempel, in axialer Richtung um die Dicke des Ansatzteiles aus der normalen axialen Lage vom Messer weg in eine angehobene Lage verstellbar und in beiden Lagen verriegelbar.

Dieses Verlagern des Formrohres um die axiale Dicke des Ansatzteiles, welches das Würfel-Gatter umfasst und gegebenenfalls auch um die Dicke der eventuell vorhandenen, stromaufwärts davon angeordneten, in Querrichtung aktivierbaren und deaktivierbaren, Zwischenplatte, kann bevorzugt mittels einfacher Pneumatik-Zylinder durchgeführt werden, was für die Verstellung zwischen zwei Endlagen eines Bewegungsweges ausreichend ist.

### (Sägen)

Beim Schneiden, besser Sägen, von knochigem Material mittels eines gezahnten Messers entsteht Knochenmehl, welches möglichst aus dem Schneidspalt ausgetragen werden soll, weshalb zu diesem Zweck ausreichend Freiräume im Messer vorgesehen werden, beispielsweise in Umfangsrichtung zwischen den Zähnen oder in Form von Vertiefungen in den Haupt-Flächen des plattenförmigen Messers, in denen sich das Knochenmehl sammeln kann.

Da deren Aufnahmekapazität begrenzt ist, umfasst die Schneidemaschine vorzugsweise eine Reinigungsvorrichtung, um während des Schneidevorganges das Knochenmehl von dem rotierenden Messer zu entfernen, was beispielsweise mittels Druckluftdüsen, Wasserdüsen oder mechanisch mittels einer Bürste erfolgen kann, welche das Messer reinigen.

### c) Ausführungsbeispiele

Ausführungsformen gemäß der Erfindung sind im Folgenden beispielhaft näher beschrieben. Es zeigen:
- **Figur 1a:**: die Schneidemaschine in der Ruhestellung in der Seitenansicht,
- **Figur 1b:**: einen Schnitt durch die Schneidemaschine in der Ruhestellung der Figur 1a entlang der Längs-Mittelebene,
- **Figur 2:**: die Schneidemaschine in der Ruhestellung der Figur 1a betrachtet in der Vertikalen von oben,
- **Figur 3a - g:**: unterschiedliche Arbeitsstellungen für das Ankuppeln eines Querstempels an den Querpress-Antrieb,
- **Figur 4a:**: einen Schnitt entlang der Längs-Mittelebene mit an den Antrieben befestigten Pressstempeln für das Querverpressen,
- **Figur 4b:**: mit beiden Pressstempeln bereits in der Formrohr-Rinne,
- **Figuren 5:**: Schnittdarstellungen entlang der in Figur 4b eingezeichneten Schnittebenen mit Blickrichtung in Längspress-Richtung, nämlich
- **Figur 5a:**: eine Aufsicht auf die Maschine von oben in Richtung der Längspress-Richtung, also auf Höhe der Schnittebene Va - Va,
- **Figur 5b:**: geschnittenen entlang der Schnittebene Vb - Vb,
- **Figur 5c:**: geschnittenen entlang der Schnittebene Vc - Vc,
- **Figur 5d:**: geschnittenen entlang der Schnittebene Vd - Vd,
- **Figur 5e:**: geschnittenen entlang der Schnittebene Ve - Ve.

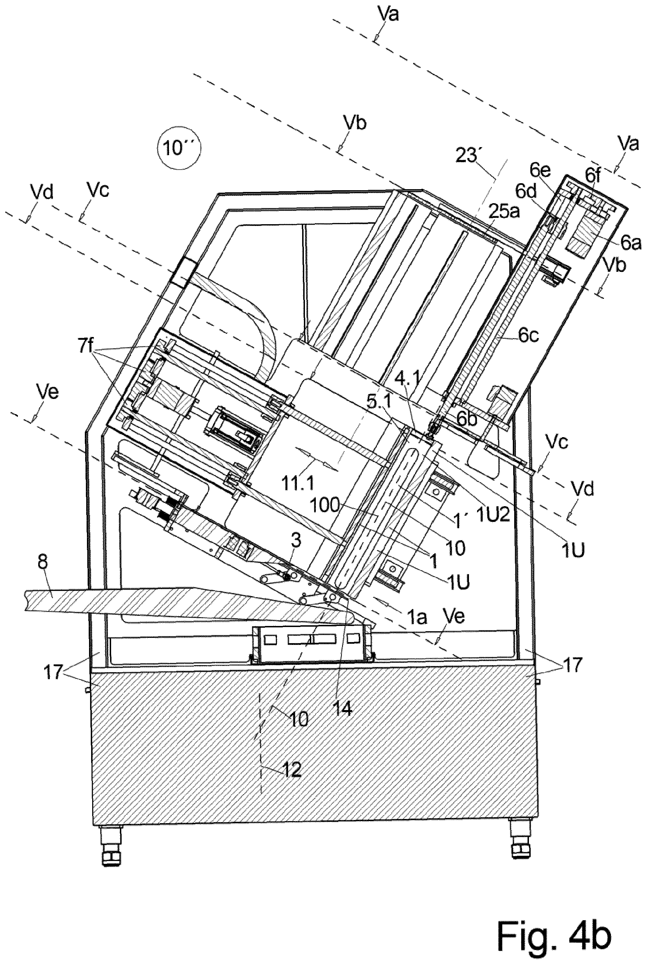

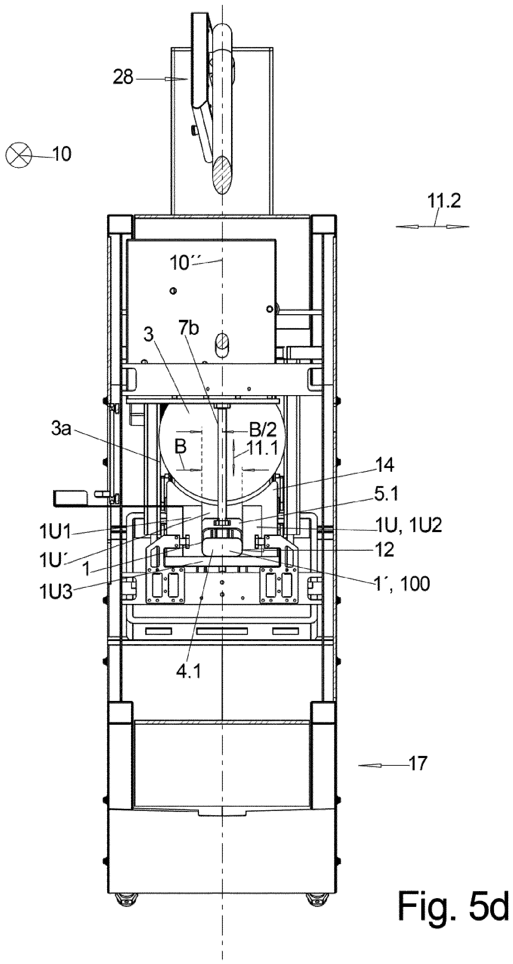

Die **Figuren 4b** **und** **5d** zeigen am besten das beim Aufschneiden umfänglich geschlossene Formrohr 1, welches in Längsrichtung 10 verläuft, und den Formrohr-Hohlraum 1' in dessen Inneren. Dieser wird gebildet durch eine im Querschnitt U-förmige Formrohr-Rinne 1U mit einem Rinnen-Hohlraum 1U' sowie einen Querpress-Stempel 5.1, der von der offenen Längsseite der Formrohr-Rinne 1U mit möglichst geringem Spiel in diese in einer ersten Querrichtung 11.1 oder Querpress-Richtung 11.1, die quer, insbesondere im 90°-Winkel, zur Längsrichtung 10 verläuft, eingeführt ist, sodass dieser den Rinnen-Hohlraum 1U' umfänglich verschließt, vorzugsweise dicht verschließt, wodurch das Formrohr 1 gebildet wird.

Wie die Seitenansicht der Maschine in **Figur 4b** zeigt, steht die Verlaufsrichtung der Formrohr-Rinne 1U, die axiale Richtung 10 bzw. Längspressrichtung 10, nicht exakt senkrecht, sondern gegenüber der Vertikalen 12 um insbesondere etwa 20 bis 50 Grad so geneigt, dass die offene Längsseite der Formrohr-Rinne 1U etwas nach oben weist, was das Einlegen eines neuen Leibes 100 in die Formrohr-Rinne 1U erleichtert.

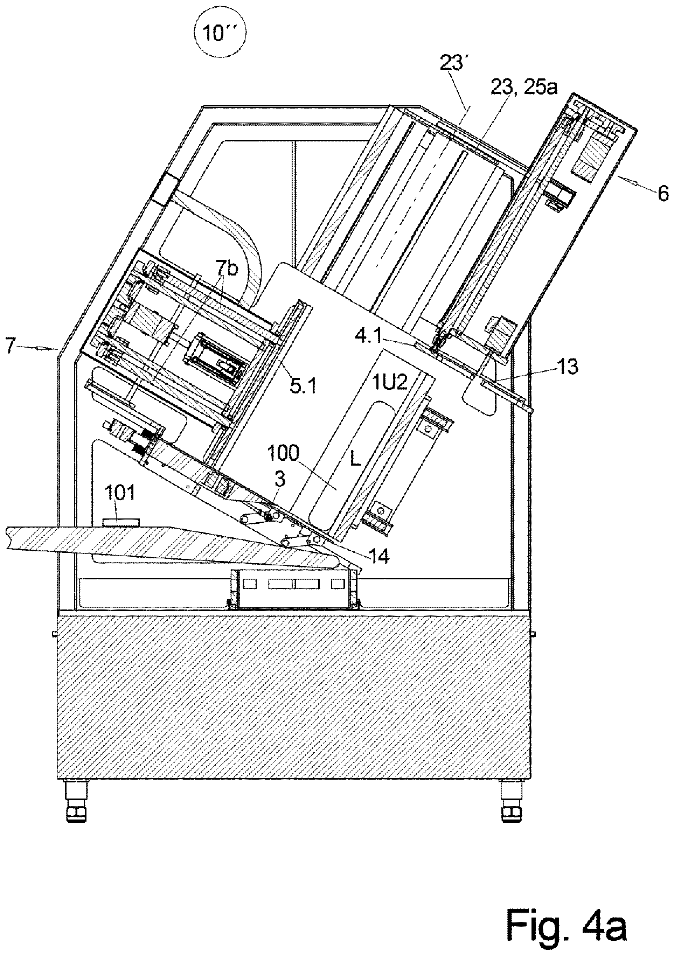

Wie am besten die **Figur 4a**, b und 5d zeigen, besteht die Formrohr-Rinne 1U aus zwei Seitenwänden 1U1, 1U2, sowie einem Boden 1U3, wobei die Seitenwände 1U1, 1U2 in ihrem lichten Querabstand, der Breite B, zueinander einstellbar sind durch Verfahren, insbesondere entlang des Bodens 1 U3, in der zweiten Querrichtung 11.2, die quer, insbesondere jeweils im 90°-Winkel, zu den der axialen Richtung 10 als auch der 1. Querrichtung 11.1 verläuft.

Die Seitenwände 1U1, 1U2 befinden sich immer symmetrisch zur Längsmittelebene 10", die aufgespannt wird durch die erste Querrichtung 11.1 sowie die Längsrichtung 10 und welche ortsfest parallel zu den Innenflächen der Seitenwände 1U1, 1U2 und/oder lotrecht auf der Fläche des Bodens 1 U3 verläuft, und zu den Innenflächen der beiden Seitenwände 1U1, 1U2 den beidseits gleich großen Abstand B/2 einnimmt.

Die Seitenwände 1U1, 1U2, genauer gesagt die Innenflächen der Seitenwände, verlaufen vorzugsweise parallel zueinander, um einen Querpress-Stempel 5.1 mit fixer Breite passgenau dazwischen einschieben zu können.

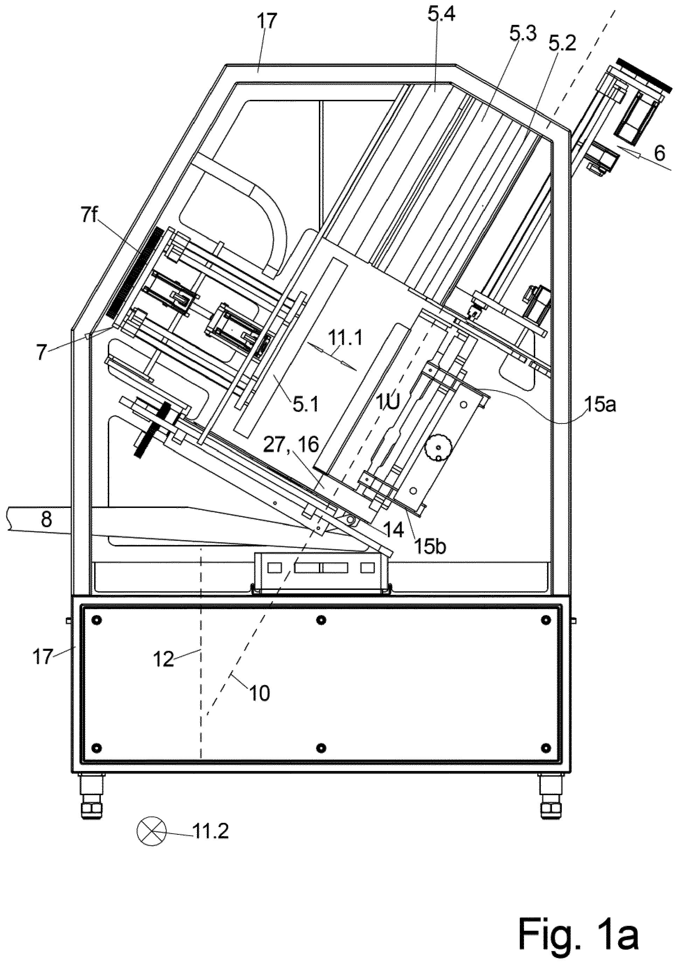

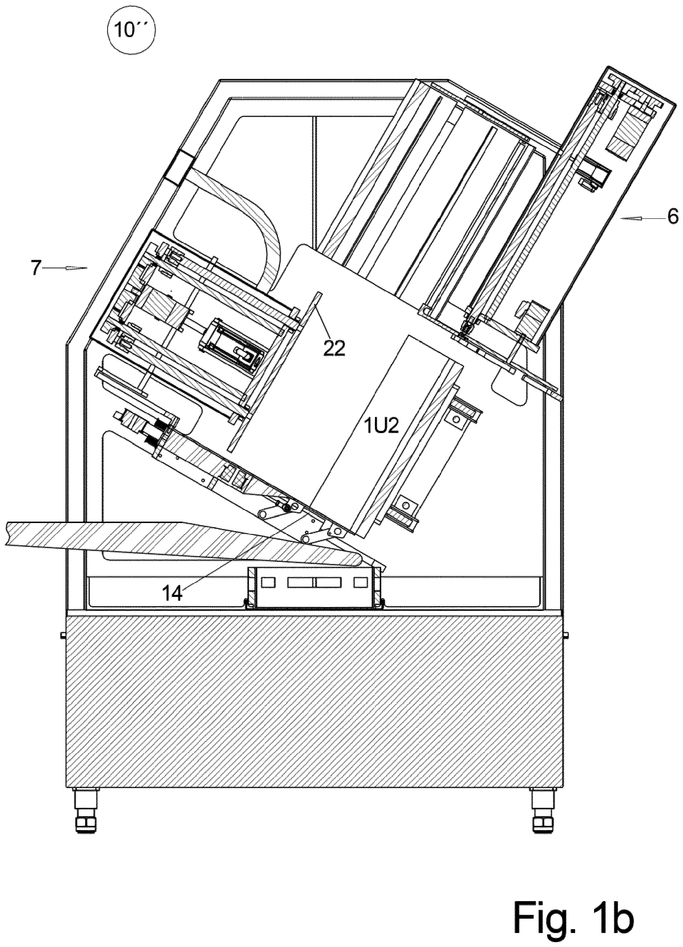

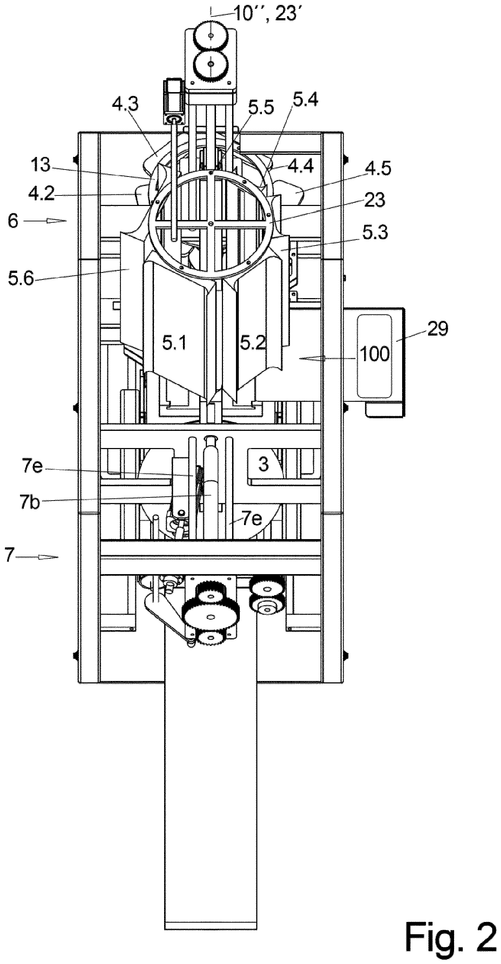

Die **Figuren 1a**, b zeigen - bei vom Grundgestell 17 entfernten Gehäuse-Beplankungen - einerseits in der Seitenansicht und andererseits geschnitten entlang der Längsmittelebene 10" sowie in **Figur 2** in der Aufsicht von oben die Schneidemaschine in einer Ruhestellung, in der sich der Querpress-Antrieb 7 in der zurückgezogenen Ruhestellung befindet und daran noch kein Querpress-Stempel angekuppelt ist, und ebenso sich der Längspress-Antrieb 6 in der zurückgezogenen Ruhestellung befindet und noch kein Längspress-Stempel an ihm angekuppelt ist.

Dabei sind in der **Figur 1a** die in der zweiten Querrichtung 11.2 zur Längsrichtung 10 verlaufenden Seitenwand-Führungen 15a, b erkennbar, entlang denen die beiden Seitenwände 1U1 und 1U2 gegensynchron zueinander bewegbar sind zur ortsfesten Längsmittelebene 10".

Ein in diesem Formrohr 1 befindlicher und in der ersten Querrichtung 11.1 verpresster Laib 100 aus z.B. Frischfleisch wird zusätzlich - wie **Figur 4b** zeigt - auch in Längsrichtung 10 verpresst mittels eines Längspress-Stempels 4.1.

Der Längspress-Stempel 4.1 füllt den Querschnitt des Formrohr-Hohlraumes 1' zunächst im hinteren Endbereich dicht aus und wird danach in axialer Richtung 10 weitergeschoben, sodass der -in den **Figuren 4a**, b dargestellte - Laib 100 zunächst in axialer Richtung 10 gegen einen Längspress-Anschlag - hier die an die schneidseitige Stirnfläche des Formrohr-Revolvers 1 angelegte Anschlagplatte 14 - verpresst werden kann und danach - bei von dieser schneidseitigen Stirnfläche des Formrohr-Revolvers 1 beanstandeten Anschlagplatte 14 - über das untere Ende, das vordere, untere Ende, das Schneidende 1a, des Formrohres 1 vorstehen kann und dort von einem entlang der vorderen Stirnfläche des Formrohres 1 in Querrichtung bewegbaren Messer 3 eine Scheibe 101 vom vorderen Ende des Laibes 100 abgetrennt werden kann, welche dann auf den Abförderer 8 fällt und abtransportiert wird.

Die Seitenwände 1U1, 1U2 können auf bestimmte, festgelegte Querabstände, zueinander und damit zur Längs-Mittelebene 10" verfahren werden, und für jede dieser definierten Breiten B, also inneren freien Breiten, der Formrohr-Rinne 1U ist ein Querpress-Stempel 5.1 bis 5.6 mit einer analogen Breite b1 bis b5 vorhanden, da die Querpress-Stempel in der Breite nicht variabel sind.

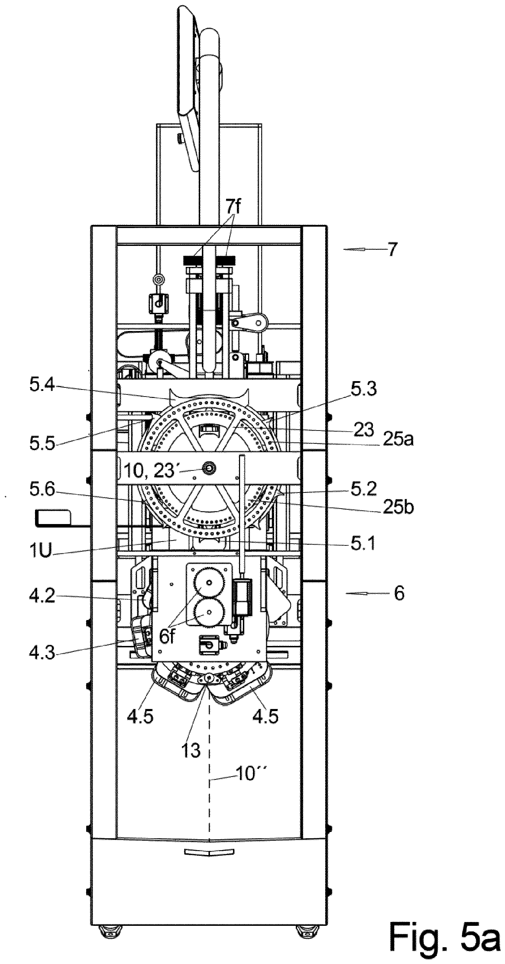

Zu diesem Zweck werden die Querpress-Stempel 5.1 bis 5.6 in einem Querstempel-Revolver 23 vorgehalten - wie am besten in **Figur 2** sowie **Figur 5a** ersichtlich -, dessen Drehachse oder Schaltachse 23' parallel zur Längsrichtung 10 des Formrohres 1 verläuft, aber zum Formrohr 1 so versetzt ist, dass - siehe **Figur 5a** - der der Formrohr-Rinne 1U zugewandte und nächstliegende, in der Schneidposition 12 befindliche, Querpress-Stempel 5.1 sich noch radial und axial außerhalb der Formrohr-Rinne 1U befindet, und zwar in fluchtender Lage zu der Führung 22 am Querpress-Antrieb 7.

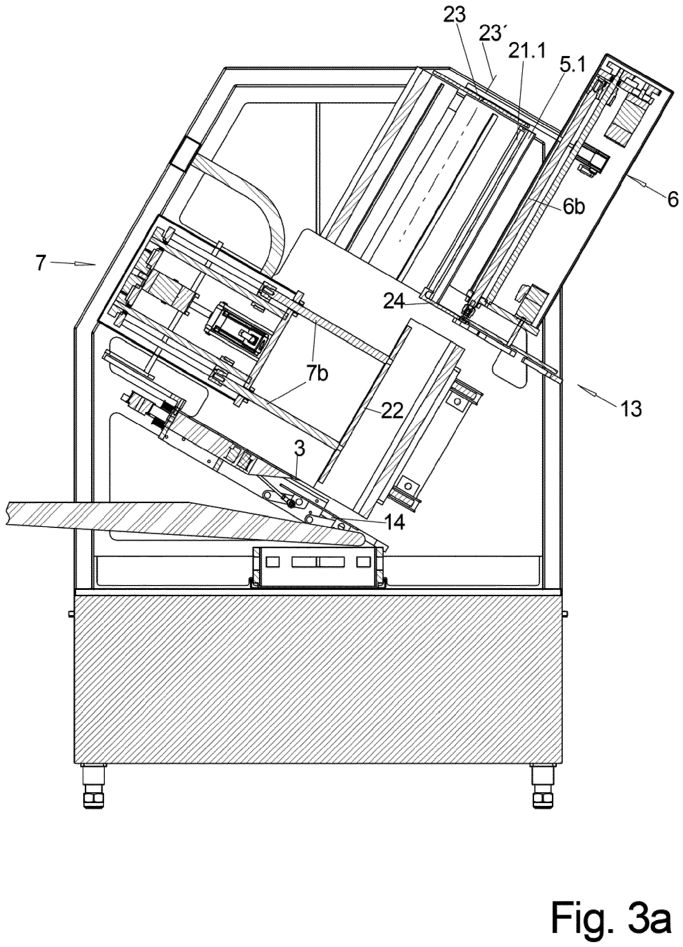

Denn der Querstempel-Revolver 23 ist in Längsrichtung 10 nach oben versetzt zur Formrohr-Rinne 1U angeordnet, und die Querpress-Stempel 5.1 bis 5.6l können - wenn sie sich in einer zu der Führung 22 am Querpress-Antrieb 7 fluchtenden Position befinden - aus dem Querstempel-Revolver 23 nach unten herausgezogen und auf die Führung 22 des Querpress-Antriebes 7 aufgezogen und dort verriegelt werden, wie in den **Figuren 3a bis 3d** dargestellt.

Auf diese Art und Weise kann - vor, nach oder gleichzeitig mit der Einstellung der Seitenwände 1U1 und 1U2 der Formrohr-Rinne 1U auf einen definierten Querabstand B - der dazu passende Querpress-Stempel . 1 hierfür ausgewählt werden, indem der Querstempel-Revolver 23 entsprechend gedreht wird, bis sich der passende Querpress-Stempel 5.1 fluchtend zu der darunter befindlichen Führung 22 des Querstempel-Antriebes 7 in der Schneidposition 12 befindet und auf die Führung 22 aufgeschoben wird.

In diesem Fall befinden sich die Schaltachse 23' des Querstempel-Revolvers 23 und die Schaltachse 13' des Längsstempel-Revolvers 13 auf einander gegenüberliegenden Seiten bezüglich der Längsrichtung 10, die durch das Formrohr 1 verläuft und beide in der Längsmittelebene 10".

Um keinen weiteren gesteuerten Antrieb zu benötigen, wird der Längspress-Antrieb 6 auch verwendet, um einen gewünschten Querpress-Stempel 5.1 aus dem Querstempel-Revolver 23 nach unten herauszuziehen und auf die Führung 22 des Querpress-Antriebs 7 aufzuziehen, wie in den **Figuren 3a** **bis g** dargestellt:

Wie **Figur 3a** zeigt, kann die Schubstange 6b des Längspress-Antriebs 6 - die normalerweise einen Längspress-Stempel vorwärtsschiebt - an ihrem vorderen Ende mit einem Mitnehmer 24 gekoppelt werden, der wie die Längspress-Stempel 4.1 bis 4.6 lösbar an einer Stelle des Umfanges des Längsstempel-Revolvers 13 befestigt ist und an seiner der Schubstange 6b zugewandten Seite ein dazu passendes anderes Kupplungsteil 9b trägt. Der Mitnehmer 24 kann mit dem unteren Ende des Querpress-Stempels 5.1, welcher sich an der Schneidposition 12 befindet, gekoppelt werden, wenn sich der Mitnehmer 24 durch Drehen des Längsstempel-Revolvers 13 in der Schneidposition 12 befindet.

Vor oder nach dem Verschwenken des Mitnehmers 24 in seine Schneidposition 12 bezüglich der Schaltachse 13' des Längspress-Revolvers 13 muss der für die Benutzung vorgesehene Querpress-Stempel, z.B. 5.1, ebenfalls in seine Schneidposition 12 bezüglich seines Querpress-Revolvers 23 gebracht werden.

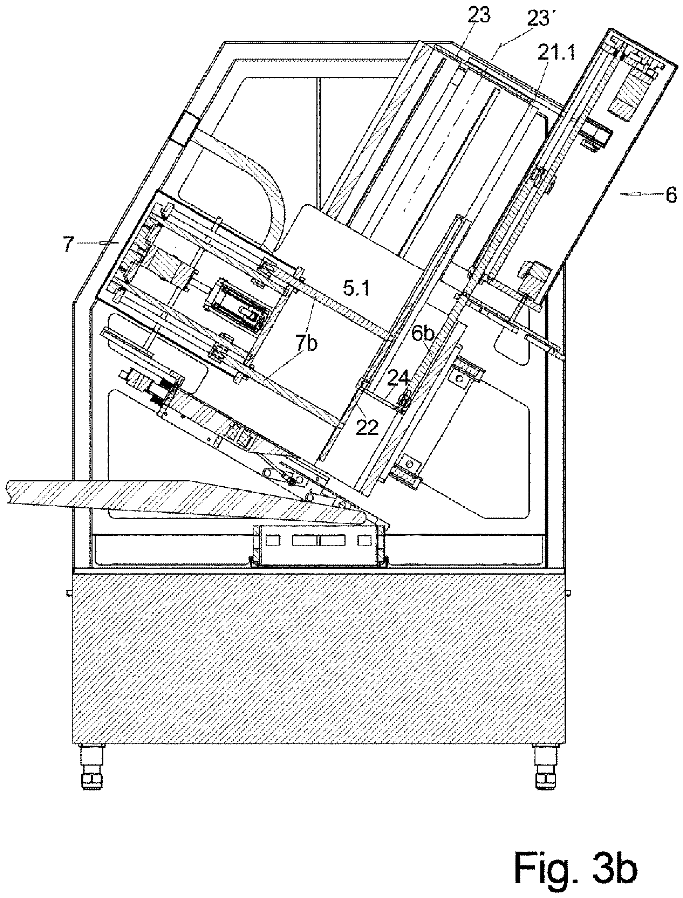

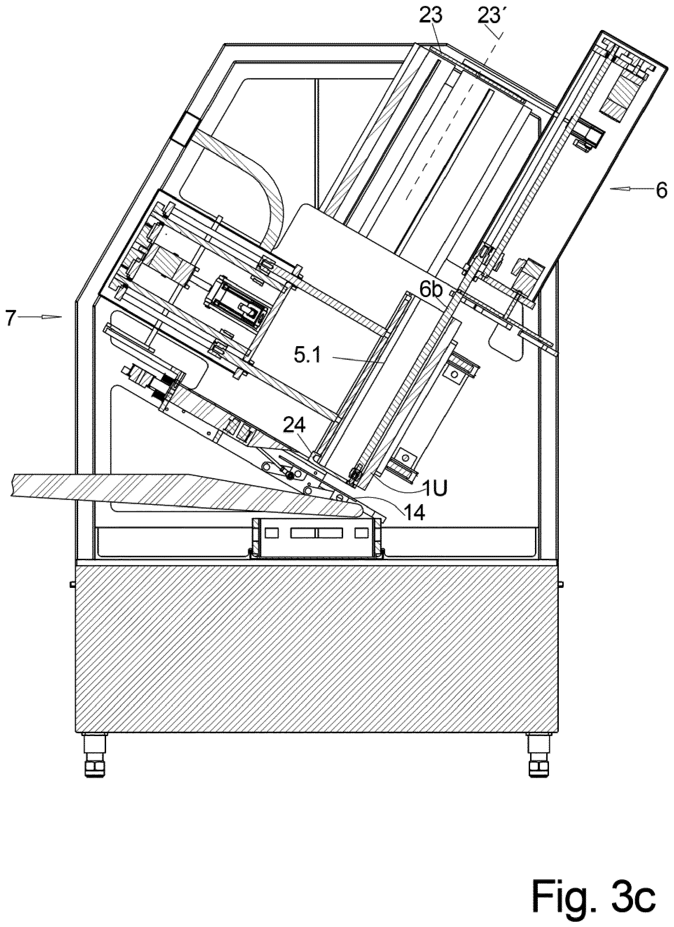

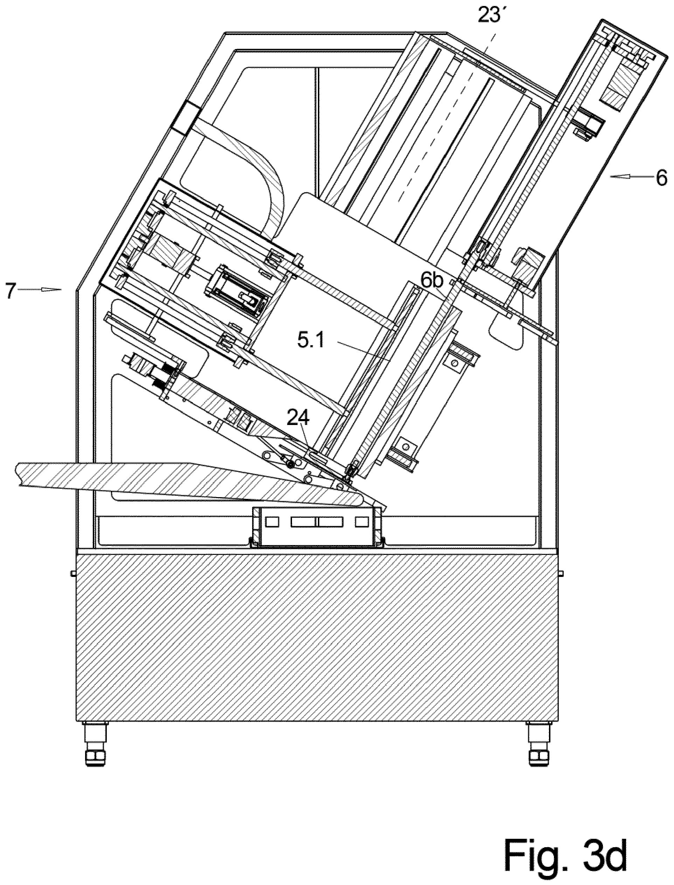

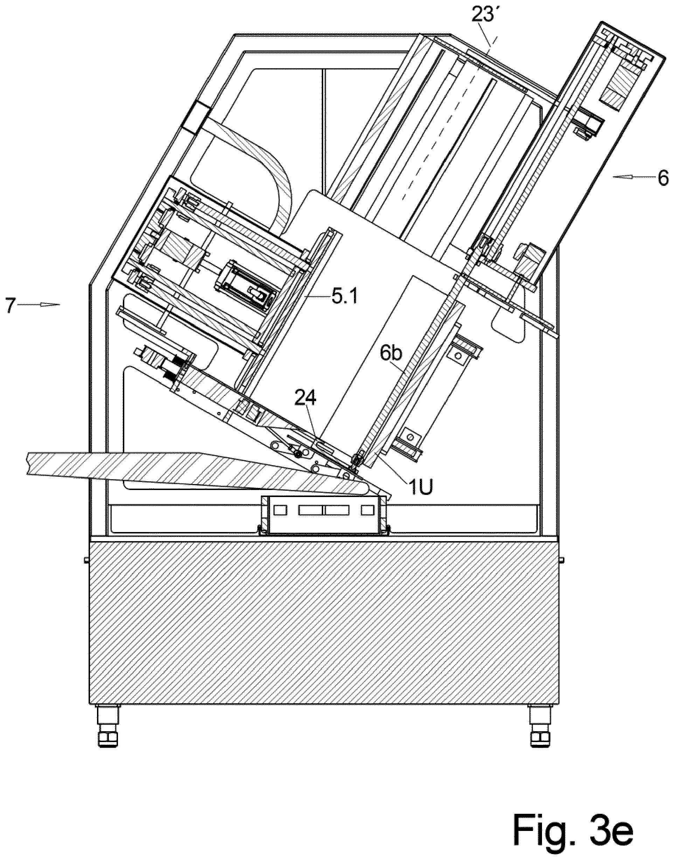

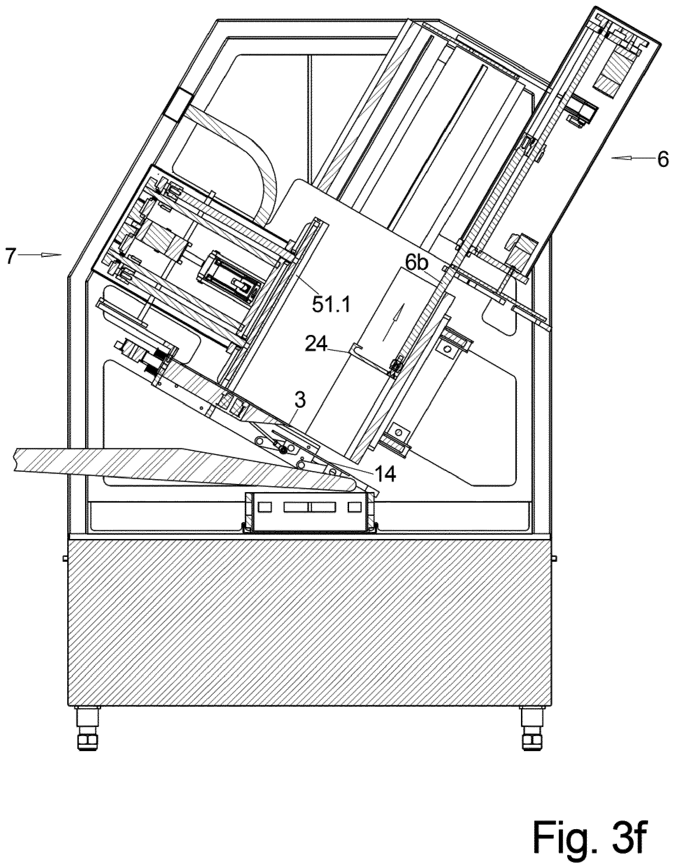

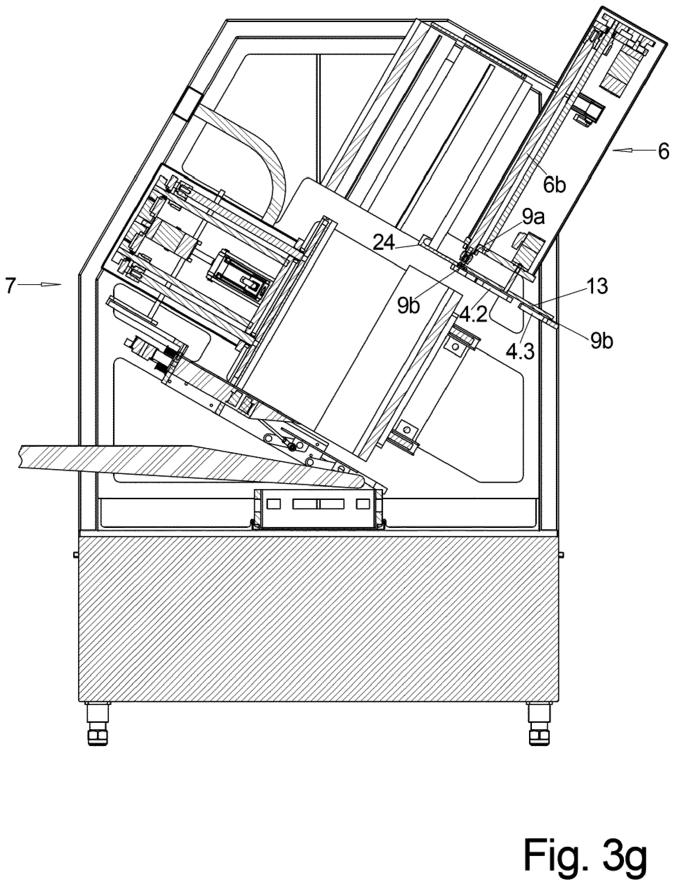

Dadurch gelangt das untere Ende dieses in der Schneidposition 12 befindlichen Querpress-Stempels, z.B. 5.1, mittels eines daran vorhandenen Eingriffselementes in Eingriff mit dem Mitnehmer 24, der in diesem Fall in der Seitenansicht der **Figuren 3** betrachtet ein Haken ist, dessen Öffnung zum Boden der Formrohr-Rinne 1U hin weist.

Durch axiales nach unten Fahren der Schubstange 6b wird der Mitnehmer 24 nach unten bewegt und zieht das untere Ende des Querpress-Stempels 5.1 nach unten und auf die Führung 22 des Querpress-Antriebs 7 - wie **Figur 3b** zeigt - bis sich der Querpress-Stempel 5.1 in einer definierten Arbeitsstellung in Längsrichtung 10 gegenüber der Führung 22 befindet gemäß **Figur 3c** und gegenüber dieser mittels einer - nicht dargestellten - Verriegelungsvorrichtung verriegelt werden kann. In dieser Arbeitsstellung deckt sich die Längserstreckung des Querpress-Stempels 5.1 etwa mit der Längserstreckung der Formrohr-Rinne 1U.

Sobald dies geschehen ist, wird der Mitnehmer 24 außer Eingriff mit dem Querpress-Stempel 5.1 gebracht - wie in **Figur 3d** zu erkennen - was bei dieser Form des Mitnehmers 24 dadurch erfolgt, dass
- zunächst der Querpress-Stempel 5.1 mittels des Querpress-Antriebes 7 so weit in Richtung Formrohr-Rinne 1U bewegt wird, dass das Eingriffselement des Querpress-Stempels in der ersten Querrichtung 11.1 außer Eingriff zu dem Haken des Mitnehmers 24 gerät und
- danach der Mitnehmer 24 in axialer Richtung 10 vorwärts geschoben wird mittels des Längspress-Antriebes 6, bis sich der Mitnehmer 24 vollständig unter der unteren Stirnfläche des Querpress-Stempels 5.1 und dem Eingriffselement befindet gemäß **Figur 3d****.**

Daraufhin wird der Querpress-Stempels 5.1 soweit in der ersten Querrichtung 11.1 von der Formrohr-Rinne 1U weg verfahren, dass er sich nicht mehr im axialen Bewegungsweg des Mitnehmers 24 befindet gemäß **Figur 3e****,** sodass nunmehr der Mitnehmer 24 in Längsrichtung 10 mittels des Längspress-Antriebes 6 zurück nach oben verfahren kann gemäß **Figur 3f****,** bis sich der Mitnehmer 24 wieder an dem Längsstempel-Revolver 13 verrastet gemäß **Figur 3g** und durch weiteres Zurückfahren der Schubstange 6b sich diese von dem Mitnehmer 24 löst durch Lösen der Kupplung 9 dazwischen.

Die Querschnitte der **Figuren 5a bis 5e** lassen weitere Details erkennen:

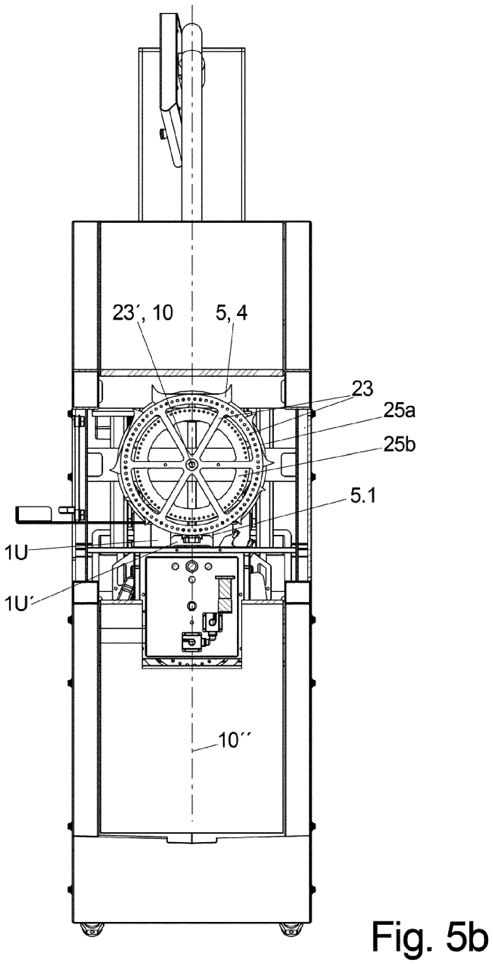

**Figur 5a**, b zeigen den Querstempel-Revolver 23 mit den beiden Halteringe 25a, b, zwischen denen in Längsrichtung 10 die Führungen 21.1 - 21.6 für jeden der Querpress-Stempel 5.1 - 5.6 verlaufen, die lösbar an diesem Querpress-Revolver 23 befestigt sind. Der untere Haltering 25b besitzt einen geringeren Durchmesser, so dass der zum Verpressen benötigte Querpress-Stempel an dessen Außenumfang vorbei nach unten verschoben werden kann auf die Führung 22 des Querpress-Antriebes 7 wie weiter oben beschrieben.

In beiden Figuren ist auch der bereits in die Formrohr-Rinne 1U eingeführte Querpress-Stempel 5.1 zu erkennen, der mit seinen äußeren Seitenflächen an den Innenflächen der Seitenwände 1111 und 1U2 der Formrohrrinne 1U anliegt.

**Figur 5a** lässt ferner gut die beiden Getriebe 6f, 7f erkennen, die in den beiden Pressantrieben 6, 7 von jeweils einem Motor 6a, 7a aus die jeweils mit mindestens einer Gewindespindel 6c, 7c antreiben, wobei diese Getriebe auch jeweils einen Zahnriemen oder eine Kette umfassen können.

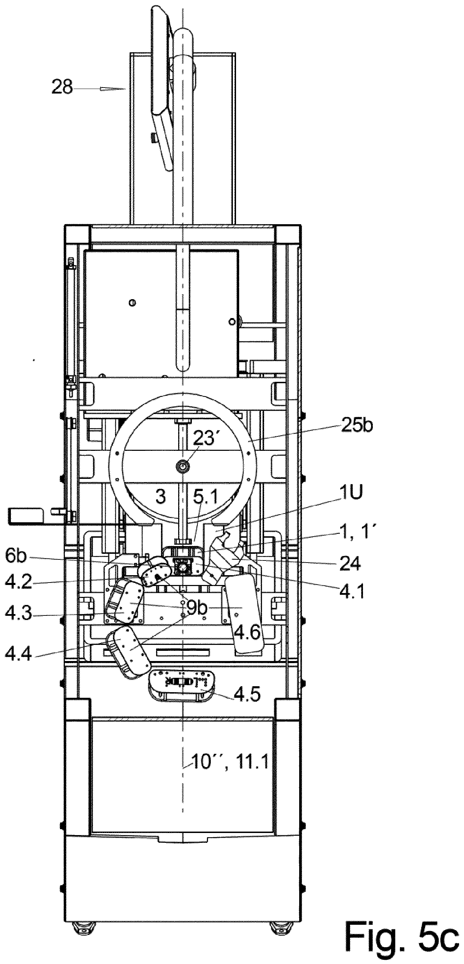

In **Figur 5c** ist der Längsstempel-Revolver 13 und dessen Schaltachse 13' nur angedeutet, da dieser Schnitt unmittelbar unterhalb dieses in aller Regel ringförmigen Längsstempel-Revolvers 13 liegt. Zu sehen sind jedoch die im Kreis angeordneten Längspress-Stempel 4.1 - 4.6, deren nach oben weisende Kupplungsteile 9b zum Ankuppeln an dem Kupplungsteil 9a der Schubstange 6b des Längspress-Antriebes 6 auf einem gemeinsamen konzentrischen Kreis um die Schaltachse 13' liegen.

In dieser Figur ist auch zu erkennen, dass der Mitnehmer 24 in gleicher Weise wie ein Längspress-Stempel an einer Umfangsstelle des Längsstempel-Revolvers 13 und ebenso lösbar angeordnet und an die Schubstange 6b ankuppellbar ist wie die einzelnen Längspress-Stempel 4.1 - 4.6 und ebenfalls ein solches Kupplungsteil 9b trägt.

Bei den einzelnen Längspress-Stempeln ist deren Veränderbarkeit ihre Abmessung in radialer Richtung des Längsstempel-Revolvers 13 zu erkennen, also bei dem bereits in der Formrohr-Rinne 1U eingesetzten Längspress-Stempel 4.1 dessen Längen-Veränderbarkeit in der Querpress-Richtung 11.1.

**Figur 5d** zeigt nur noch den im Einsatz befindlichen Längspress-Stempel 4.1, da dieser Schnitt oberhalb dieses bereits in das Formrohr 1 eingefahrenen Längspress-Stempels 4.1 liegt, jedoch bereits unterhalb des Längsstempel-Revolvers 13, an dem sich die übrigen Längspress-Stempel 4.1 - 4.6 befinden.

Deshalb sind neben dem Formrohr 1 auch noch besser als in **Figur 5c** bereits das kreisscheibenförmige Messer 3 zu erkennen sowie die daneben angeordnete Anschlagplatte 14, deren Funktionskante konvex gekrümmt ist und parallel zum Außenumfang der Umfangskante, der Schneidkante 3a des Messers 3, verläuft, in der Regel in einem geringen radialen und meist auch axialen Abstand hierzu.

**Figur 5d** zeigt ferner die Betätigungsvorrichtungen für die beiden Seitenwände 1U1 und 1U2, um diese entlang des Bodens 1U3 zu verschieben und damit die Breite B der Formrohr-Rinne 1U auf einen vorgegebenen Wert entsprechend der Breite eines der Querpress-Stempel 5.1 - 5.6 einzustellen.

In dieser **Figur 5d** ist ferner zu erkennen, dass der Boden 1U3 zusammen mit den Seitenwänden 1U2 und 1U1 in Blickrichtung der **Figur 5d****,** also in der Längsrichtung 10, von der Normallage aus in eine angehobenen Lage beweglich ist - ebenso wie der eingesetzte Querpress-Stempel 5.1 - um an das untere Ende des Formrohres 1 in dieser angehobenen Lage - die in der Seitenansicht in der Figur 1a verglichen mit der Figur 1b zu erkennen ist - gemäß **Figur 1a** ein Ansatzteil 27 mit einem Würfel-Gatter 16 darin ansetzen zu können, welches wie bekannt sich kreuzende Klingen aufweist, sodass der Querschnitt des aufzuschneidenden Laibes in einzelne nebeneinanderliegende Streifen aufgeschnitten wird vor dem Abtrennen durch das Messer 3 und dadurch statt jeweils einer Scheibe jeweils eine Vielzahl von Würfeln erzeugt werden.

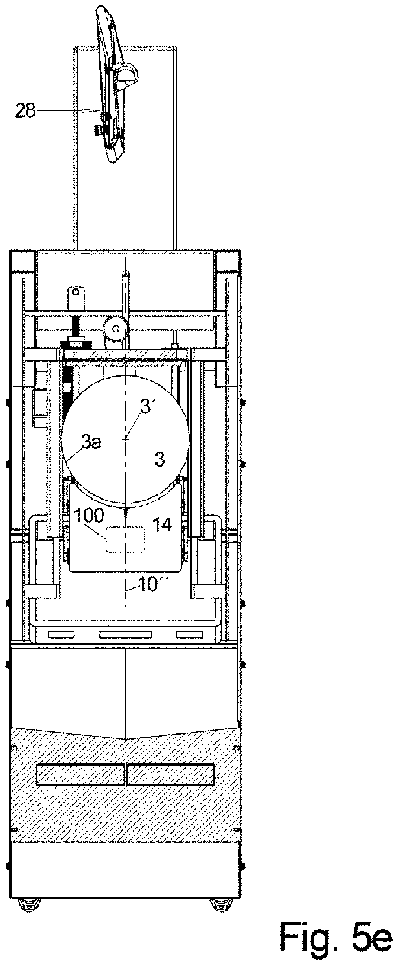

In dem nochmals tiefer liegenden, unmittelbar am unteren, schneidseitigen Ende des Formrohres 1 liegenden Schnitt der **Figur 5e** sind das unmittelbar darunter angeordnete Messer 3 sowie die gleich hoch oder noch etwas tiefer liegende Anschlagplatte 14 vollständig zu erkennen, unmittelbar bevor die in der Darstellung der **Figur 5e** weiter nach unten wandernde Schneideinheit bestehend aus Messer 3 und Anschlagplatte 14 eine Scheibe 101 von dem vorderen, aus dem unteren Ende des Formrohres 1 bis zur Anschlagplatte 14 vorstehenden, Laib 100 abtrennt, wie eine davon auf dem Abförderer 8 in **Figur 4a** dargestellt ist.

Die Vorgehensweise für das Verpressen und Aufschneiden eines Laibes 100 in Scheiben 101 ist somit die Folgende:
Ausgehend von der Ruhestellung der Maschine, wie anhand der **Figuren 1a****, b** sowie **Figur 2** erläutert, gibt der Maschinenführer in die Bedieneinheit 28 den für das Verpressen gewünschten Querpress-Stempel 5.1 und Längspress-Stempel 4.1 ein, was für jeden aufzuschneidenden Laib 100 neu erfolgen kann oder bei einer Charge von etwa gleich großen und gleich geformten Laiben 100 auch nur einmalig, vor Beginn des Aufschneidens dieser Charge, erfolgen kann.

In aller Regel wird spätestens jetzt wird der aufzuschneidende Laib 100 vom Maschinenführer auf die am besten in **Figur 2** zu erkennende Auflagefläche 29 gelegt, die vorzugsweise seitlich aus der Maschine vorsteht und die gleiche Neigung besitzt wie die Formrohr-Rinne.

Nun wird der ausgewählte Querpress-Stempel 5.1 in die Schneidposition 12 gebracht und mittels des von dem Längspress-Antrieb betätigten Mitnehmers 24 in die Arbeitsteilung auf die Führung 22 des Querpress-Antriebes 7 aufgezogen, wie vorstehend zu den **Figuren 3a bis 3g** erläutert.

Nachdem die Schubstange 6b des Längspress-Antriebes 6 wieder vom Mitnehmer 24 abgekuppelt ist, kuppelt sie an dem inzwischen in die Schneidposition 12 gebrachten, ausgewählten Längspress-Stempel 4.1 an, wie in **Figur 4a** dargestellt.

Mittels ihrer entsprechenden Antriebe werden Querpress-Stempel 5.1 und Längspress-Stempel 4.1 nun in den Rinnen-Hohlraum 1U' hinein verlagert, vorzugsweise bevor der Abstand der Seitenwände 1U1, 1U2 auf den für diesen Laib 100 vorgesehenen Abstand B zusammen geschoben werden, und zwar in der Reihenfolge, dass sich zunächst der Längspress-Stempel 4.1 innerhalb des axialen Längenbereiches des Querpress-Stempels 5.1 befindet, bevor dieser den im Rinnen-Hohlraum 1U' befindlichen Längspress-Stempel 4.1 erreicht, insbesondere bevor dieser in die Formrohr-Rinne 1U eintaucht, so dass dann während des Querverpressens der hierfür in aller Regel 2-teilige Längspress-Stempel 4.1 in der Querpress-Richtung 11.1 vom Querpress-Stempel 5.1 zusammengedrückt werden kann.

Dabei muss jedoch der aufzuschneidende Laib 100 in die Formrohr-Rinne 1U eingebracht werden, bevor der Querpress-Stempel 5.1 in die Formrohr-Rinne eintaucht.

Dies erfolgt durch Einschieben des neuen Laibes 100 in die Maschine entlang einer Auflagefläche 29, bis der Laib 100 in die Formrohr-Rinne 1U fällt, wofür die Auflage Fläche 29 auch eine Neigung in Richtung Formrohr-Rinne 1U aufweisen kann, damit dies Schwerkraft-bedingt ohne Schieben durch den Maschinenführer erfolgen kann. Die Auflagefläche 29 kann in der Aufsicht betrachtet seitlich aus der Maschine vorstehen, wie in Figur 2 ersichtlich und/oder auch als Schublade ausgebildet sein, die am innenliegenden Ende offen ist, so dass nach dem Auflegen des Laibes 100 diese Schublade lediglich in die Maschine eingeschoben werden muss, um den Laib 100 in die Formrohr-Rinne 1U abzuwerfen.

Dann kann der im Formrohr 1 befindliche Laib 100 durch die beiden Stempel gleichzeitig, abwechselnd oder auch mit zwischenzeitlichen Entlastungen sowohl in der Querpress-Richtung 11.1 als auch in der Längspress-Richtung, der Längsrichtung 10, verpresst werden, in diesem Fall gemäß Figur 4c gegenüber der an das schneidseitige, untere, vordere Ende des Formrohr des eins angelegten Anschlag Platte 14.

**Figur 4b** zeigt eine demgegenüber erste abgewandelte Vorgehensweise, in der der Querpress-Stempel 5.1 bereits den im Formrohr 100 befindlichen Laib 100 in Querpress-Richtung 11.1 verpresst, sozusagen als erstem Schritt, wobei sich die Seitenwende 1U1 und 1U2 auch noch in einem größeren Abstand zueinander befinden können als die Breite b1 dieses Querpress-Stempels 5.1 beträgt und wobei sich wie dargestellt der passende Längspress-Stempel 4.1 noch außerhalb der Formrohr-Rinne 1U befinden kann.

Damit dieser in die Formrohr-Rinne einfahren kann muss diese in der ersten Querrichtung 11.1 eine ausreichende Erstreckung aufweisen, wofür der Querpress-Stempel 5.1 entweder noch nicht weit genug gegen die Formrohr-Rinne gefahren sein darf oder hierfür wieder zurück Verfahren werden muss.

Eine zweite abgewandelte Vorgehensweise besteht darin, dass der Querpress-Stempel 5.1 als erstes in die Formrohr-Rinne eintaucht, jedoch nur soweit, dass diese in Querpress-Richtung 11.1 noch eine größere Erstreckung aufweist als der ausgewählte Längspress-Stempel 4.1 in diese Richtung, und wobei sich die Seitenwände auch noch nicht auf den richtigen Abstand B zusammen gefahren sind, so dass nun erst der gemäß **Figur 4b** noch außerhalb des Formrohres 1 befindliche Längspress-Stempel 4.1 in das Formrohr 1 eingefahren werden kann, und erst anschließend die Seitenwände auf ihren Soll-Abstand B gebracht werden und das Verpressen des Laibes 100 beginnt.

Anschließend wird - wie üblich - die Anschlagplatte 14 - die am besten in **Figur 5c** zu erkennen ist - auf einen vorgegebenen Abstand zum unteren, schneidseitigen Ende des Formrohres 1 mit dem darin verpressten Laib 100 gebracht, entsprechend der gewünschten Scheibendicke, und das Messer 3 in einer Querrichtung, hier ebenfalls der ersten Querrichtung 11.1, so verfahren, dass dessen Schneidkante 3a den Querschnitt des Freiraumes der Formrohr-Rinne 1U vollständig überstreicht und eine Scheibe 101 abtrennt unmittelbar vor dem vorderen unteren Ende des Formrohres 1. Dafür wird das um die Messeachse 3' rotierende Messer 3 zusammen mit der Anschlagplatte 14 in dieser Querrichtung 11.1 verstellt.

Die Auswahl der für das Verpressen und Aufschneiden zu benutzenden Stempel kann teilweise oder vollständig automatisiert sein, indem die Maschine selbst den Laib 100 soweit analysiert, insbesondere vermisst, dass die Steuerung der Maschine selbsttätig die Auswahl des richtigen Querpress-Stempels und Längspress-Stempels treffen kann, wofür der Laib 100 sich in der Regel zunächst erst in der Maschine, zumindest auf der Auflagefläche 29, befinden muss, um von entsprechenden Sensoren analysiert zu werden.

### BEZUGSZEICHENLISTE

- 1: Formrohr
- 1': Formrohr-Hohlraum
- 1U: Formrohr-Rinne
- 1U': Rinnen-Hohlraum
- 1U1,1U2: Seitenwand
- 1U3: Boden
- 1a: Schneid-Ende
- 1b: Belade-Ende
- 1.1, 1.2: Formrohr-Öffnung
- 2: Schneidvorrichtung
- 3: Messer
- 3': Messerachse
- 3': Messerebene
- 3a: Schneide, Schneidkante
- 4.1 - 4.5: Längspress-Stempel
- 5.1 -5.6: Querpress-Stempel
- 6: Längspress-Antrieb
- 6a: Motor
- 6b: Schubstange
- 6c: Gewindespindel
- 6d: Spindelmutter
- 6e: Führungsstange
- 6f: Getriebe
- 6g: Zugstange
- 7: Querpress-Antrieb
- 7a: Motor
- 7b: Schubstange
- 7c: Gewindespindel
- 7d: Spindelmutter
- 7e: Führungsstange
- 7f: Getriebe
- 8: Abförderer
- 9: Kupplung
- 9a, b: Kupplungs-Teil
- 10: axiale Richtung, Längsrichtung, Längspress-Richtung
- 10": Längs-Mittelebene
- 11: Querrichtung, radiale Richtung
- 11.1: erste Querrichtung, Querpress-Richtung
- 11.2: zweite Querrichtung
- 12: Schneidposition
- 13: Längsstempel-Revolver
- 13': Drehachse, Schaltachse
- 14: Anschlagelement, Anschlagplatte
- 14': Anschlag-Ebene
- 14a: Funktionskante
- 15a, b: Seitenwand-Führung
- 16: Würfel-Gatter
- 16a, b: Gatter-Messer
- 17: Grundgestell
- 18: Schneid-Grundgestell
- 19: Schlitten
- 20: Zentralverschluss
- 21.1/2: Führung
- 22: Führung
- 23: Querstempel-Revolver
- 23': Schaltachse
- 24: Mitnehmer
- 25a, b: Haltering
- 26: Antriebsbox
- 27: Ansatzteil
- 28: Bedien-Einheit
- 29: Auflagefläche
- 100: Laib
- 101: Scheibe

- A: Abstand
- B: Breite Formrohr-Rinne
- b1 - b5: Breite Querstempel

## Patentansprüche

1. **Schneidemaschine** zum Aufschneiden eines Laibes (100) aus elastischem Material in Scheiben (101) mit
- einem Grundgestell (17),
- einer im Grundgestell (17) befestigten, in axialer Richtung (10) verlaufenden, Formrohr-Rinne (1U), mit einer offenen Längsseite und einem stirnseitig beidseits offenen Rinnen-Hohlraum (1U'),
- wenigstens einem Querpress-Stempel (5.1 - 5.6), der in die offene Seite der Formrohr-Rinne (1U) passt zur Bildung eines Formrohres (1),
- einem fluchtend zum Formrohr (1) positionierten Längspress-Antrieb (6), der in axialer Richtung (10) eine Kraft aufbringen kann zum axialen Einfahren eines von mehreren Längspress-Stempeln (4.1 - 4.5) in das Formrohr (1) vom hinteren Ende (1b) her und Vorwärtsschieben sowie Längs-verpressen des darin befindlichen Laibes (100) in Richtung Schneidende (1a) des Formrohres (1),
- einer Schneidvorrichtung (2) mit einem Messer (3), welches vor dem Schneidende (1a) des Formrohres (1) angeordnet ist und in einer Querrichtung (11) relativ zum Formrohr (1) verlagerbar ist,
**dadurch gekennzeichnet, dass**
- die Formrohr-Rinne (1U) in ihrer Breite (B) veränderbar ist,
- mehrere Querpress-Stempel (5.1 - 5.6) mit unterschiedlicher Breite (b1 - b5) vorhanden sind, die in den offenen Querschnitt der Formrohr-Rinne (1U) eingefahren werden können,
- ein Querpress-Antrieb (7) vorhanden ist zum Verlagern eines Querpress-Stempels (5.1 - 5.6) in die offene Längsseite der Formrohr-Rinne (1U) hinein in einer ersten Querrichtung (11.1), der Querpress-Richtung (11.1).

2. Schneidemaschine nach Anspruch 1,
**dadurch gekennzeichnet, dass**
- die Breite (B) des Rinnen-Hohlraumes (1U') veränderbar ist durch Verfahren mindestens einer von zwei Seitenwänden (1U1, 1U2) der Formrohr-Rinne (1U) in einer zweiten Querrichtung (11.2) lotrecht zu einer Längsmittelebene (10") der Formrohr-Rinne (1) insbesondere entlang eines Bodens (1U3) der Formrohr-Rinne (1).

3. Schneidemaschine nach einem der vorhergehenden Ansprüche, **dadurch gekennzeichnet, dass**
- der Längspress-Antrieb (6) mit einem der Längspress-Stempel (4.1 - 4.5) koppelbar und entkoppelbar ist
und/oder
- der Querpress-Antrieb (7) mit einem der Querpress-Stempel (5.1 - 5.6 koppelbar und entkoppelbar ist.

4. Schneidemaschine nach einem der vorhergehenden Ansprüche, **dadurch gekennzeichnet, dass**
- die Querpress-Stempel (5.1 - 5.6) lösbar an oder in einem drehbaren Querstempel-Revolver (23) angeordnet sind,
- wobei der Querstempel-Revolver (23) um eine zur axialen Richtung (10) parallele, hierzu beabstandete Drehachse (23') gesteuert drehbar ist.

5. Schneidemaschine nach Anspruch 4,
**dadurch gekennzeichnet, dass**
- der Querstempel-Revolver (23) in axialer Richtung (10) versetzt ist zur Formrohr-Rinne (1U),
- der Querstempel-Revolver (23) pro Querpress-Stempel (5.1 - 5.6) jeweils eine in Längsrichtung (10) verlaufende Führung (21.1 - 21.6) aufweist und der Querpress-Antrieb (7) eine in Längsrichtung (10) verlaufende Führung (22) für einen Querpress-Stempel (5.1 - 5.6) aufweist,
- wobei die Führung (22) am Querpress-Antrieb (7) in eine zu der in der Schneidposition (12) befindlichen Führung (21.1 - 21.6) des Querstempel-Revolvers (23) fluchtende Position gebracht werden kann,
- der Längspress-Antrieb (6), insbesondere eine Schubstange (6b) des Längspress-Antriebs (6), einen in axialer Richtung (10) beweglichen Mitnehmer (24) umfasst, der, insbesondere durch Verlagerung in einer Querrichtung (11), mit dem in der Schneidposition (12) im Querstempel-Revolver (23) befindlichen Querpress-Stempel (5.1 - 5.6) koppelbar ist.

6. Schneidemaschine nach einem der vorhergehenden Ansprüche,
**dadurch gekennzeichnet, dass**
- der Längspress-Antrieb (6) und/oder der Querpress-Antrieb (7) und/oder das Messer (3) in seiner Bewegung kraftgesteuert ist,
- vorzugsweise nur die Längspress-Antrieb (6) und/oder der Querpress-Antrieb (7) kraftgesteuert sind.

7. Schneidemaschine nach einem der Ansprüche 5 oder 6,
**dadurch gekennzeichnet, dass**
der Längspress-Antrieb (6) und/oder der Querpress-Antrieb (7) eine Kugelrollspindel oder eine Gewindespindel (6c, 7c) umfasst, mit deren Hilfe die wenigstens eine Schubstange (6b, 7b) in der Pressrichtung (10, 11.1) verfahrbar ist, insbesondere relativ zu der wenigstens einen hierzu parallel verlaufenden Führungsstange (6e, 7e).

8. Schneidemaschine nach einem der Ansprüche 5 bis 7,
**dadurch gekennzeichnet, dass**
- der Querpress-Antrieb (7) und/oder der Längspress-Antrieb (6) nur an der Schneidposition (12) vorhanden ist,
- insbesondere die Schubstangen (6b, 7b) mit ihrem vorderen Bereich ins Innere der Form-Rinne (1U) eingefahren werden können, insbesondere entlang der Längsmittelebene (10".

9. Schneidemaschine nach einem der vorhergehenden Ansprüche, **dadurch gekennzeichnet, dass**
das Messer (3)
- entweder ein linear bewegliches Messer (3) ist, insbesondere ein endloses bandförmiges oder ein endliches plattenförmiges Messer (3),
- oder das Messer (3) ein rotierendes Messer (3) ist, das insbesondere um eine parallel zur axialen Richtung (10) verlaufende Messerachse (3') rotiert und insbesondere einen kreisförmigen Umfang aufweist, der als Schneide (3a) ausgebildet ist,

10. Schneidemaschine nach einem der vorhergehenden Ansprüche, **dadurch gekennzeichnet, dass**
ein Anschlagelement (14), insbesondere eine Anschlagplatte (14), für den Laib (100) vorhanden ist, das
- mit seiner Anschlag-Ebene (14') quer, insbesondere lotrecht, zur axialen Richtung (10) angeordnet ist,
- in seinem axialen Abstand (A) vor dem Schneidende (2a) des Formrohres (1) einstellbar ist,
- mit der Messerachse (3') gekoppelt, insbesondere lösbar gekoppelt, ist.

11. Schneidemaschine nach einem der vorhergehenden Ansprüche, **dadurch gekennzeichnet, dass**
- das Anschlagelement (14) relativ zum Messer (3) außer in axialer Richtung (10) auch in seinem radialen Abstand zur Messerachse (3') verstellbar ist.
und/oder
- das Anschlagelement (14) von der Messerachse (3') und/oder dem Messer (3) entkoppelbar ist, insbesondere automatisch bei einer bestimmten Stellung zur Messerachse (3').

12. Schneidemaschine nach einem der Ansprüche 5 bis 11,
**dadurch gekennzeichnet, dass**
- der jeweilige Längspress-Stempel (4.1 - 4.5) lösbar am Längspress-Antrieb (6), insbesondere dessen Schubstange (6b) befestigt ist und
- insbesondere je ein zu einer der einstellbaren Formrinnen-Breiten (B) passender Längspress-Stempel (4.1 - 4.6) lösbar an oder in einem drehbaren Längsstempel-Revolver (13) angeordnet ist,
- wobei der Längsstempel-Revolver (13) um eine zur axialen Richtung (10) des Formrohres (1) parallele, hierzu beabstandete Schaltachse (13') gesteuert verdrehbar ist.

13. **Verfahren** zum Aufschneiden eines Laibes (100) mit einer Schneidemaschinenach einem der vorhergehenden Ansprüche
**dadurch gekennzeichnet, dass**
für das Querverpressen
- einer von mehreren Querpress-Stempeln (5.1 - 5.6) ausgewählt,
- an dem Querpress-Antrieb (7) angekoppelt und
- in die einzige vorhandene Formrohr-Rinne (1U) eingefahren wird und
- deren innere lichte Breite auf die Breite des eingefahrenen Querpress-Stempels (5.1) gebracht wird.

14. Verfahren nach Anspruch 13,
**dadurch gekennzeichnet, dass**
ein in die Schneidposition (12) gebrachter Querpress-Stempel (5.1) mittels des Längspress-Antriebes (6) in Kontakt mit dem Querpress-Antrieb (7) gebracht wird, insbesondere auf die Führung (22) des Querpress-Antriebes (7) verlagert wird.

15. Verfahren nach Anspruch 14,
**dadurch gekennzeichnet, dass**
für das Erfassen und Verlagern des in die Schneidposition (12) gebrachten Querpress-Stempels (5.1) am Längsstempel-Revolver (13) ein Mitnehmer (24) lösbar angeordnet ist, der von der Schubstange (6b) des Längspress-Antriebes (6) angekoppelt wird und zum Erfassen des Querpress-Stempels (5.1) benutzt wird.

16. Verfahren nach Anspruch 13, 14 oder 15
**dadurch gekennzeichnet, dass**
für das Schneiden von Würfeln
- die Formrohr-Rinne (1U) und insbesondere auch ein darin eingefahrener Querpress-Stempel (5.1) von der Messerebene weg verfahren wird und
- in den entstehenden Zwischenraum ein Würfelgatter (16) eingesetzt, insbesondere an dem unteren, schneidseitigen Ende (1a) der Formrohr-Rinne (1U) befestigt wird,
- insbesondere die Formrohr-Rinne (1U) von der Messerebene (3') weg verfahren wird mittels des Längspress-Antriebes (6).

## Claims

1. **Cutting machine** for slicing a loaf (100) of elastic material into slices (101), having
- a base frame (17),
- a forming tube channel (1U) fixed in the base frame (17) and extending in the axial direction (10), with an open longitudinal side and a channel cavity (1U') open at both ends,
- at least one cross press stamp (5.1 - 5.6) fitting into the open side of the forming tube channel (1U) for constituting a forming tube (1),
- a longitudinal press drive (6) positioned in alignment with the forming tube (1) and capable of applying a force in the axial direction (10) for axially driving one of a plurality of longitudinal press stamps (4.1 - 4.5) into the forming tube (1) from the rear end (1b) and advancing and longitudinally pressing the loaf (100) therein toward the cutting end (1a) of the forming tube (1),
- a cutting device (2) with a blade (3) which is arranged in front of the cutting end (1a) of the forming tube (1) and is displaceable in a transverse direction (11) relative to the forming tube (1),
**characterized in that**
- the width (B) of the forming tube channel (1U) is variable,
- a plurality of cross press stamps (5.1 - 5.6) of different widths (b1 - b5) are provided which can be inserted into the open cross section of the forming tube channel (1II),
- a cross press drive (7) is provided for displacing a cross press stamp (5.1 - 5.6) into the open longitudinal side of the forming tube channel (1U) in a first transverse direction (11.1), the transverse press direction (11.1).

2. Cutting machine according to claim 1,
**characterized in that**
- the width (B) of the channel cavity (1U') is variable by moving at least one of two side walls (1U1, 1U2) of the forming tube channel (1U) in a 2. transverse direction (11.2) perpendicular to a longitudinal center plane (10") of the forming tube channel (1), in particular along a bottom (1U3) of the forming tube channel (1).

3. Cutting machine according to any of the preceding claims,
**characterized in that**
- the longitudinal press drive (6) can be coupled to and decoupled from one of the longitudinal press stamps (4.1 - 4.5)
and/or
- the cross press drive (7) can be coupled to and decoupled from one of the cross press stamps (5.1 - 5.6).

4. Cutting machine according to any of the preceding claims,
**characterized in that**
- the cross press stamps (5.1 - 5.6) are detachably arranged on or in a rotatable cross stamp turret (23),
- the cross stamp turret (23) being rotatable in a controlled manner about a rotary axis (23') parallel to the axial direction (10) and spaced therefrom.

5. Cutting machine according to one of claim 4,
**characterized in that**
- the cross stamp turret (23) is offset in the axial direction (10) relative to the forming tube channel (1U),
- the cross stamp turret (23) has a guide (21.1 - 21.6) running in the longitudinal direction (10) for each cross press stamp (5.1 - 5.6), and the cross press drive (7) has a guide (22) running in the longitudinal direction (10) for a cross press stamp (5.1 - 5.6)
- wherein the guide (22) on the cross press drive (7) can be brought into a position aligned with the guide (21.1 - 21.6) of the transverse stamp turret (23) located in the cutting position (12),
- the longitudinal press drive (6), in particular a push rod (6b) of the longitudinal press drive (6), comprises a driver (24) which can move in the axial direction (10) and can be coupled, in particular by displacement in a transverse direction (11), to the cross stamp turret (5.1 - 5.6) located in the cutting position (12) in the cross stamp turret (23).

6. Cutting machine according to any of the preceding claims,
**characterized in that**
- the longitudinal press drive (6) and/or the cross press drive (7) and/or the blade (3) is power-controlled in its movement,
- preferably only the longitudinal press drive (6) and/or the cross press drive (7) is power-controlled.

7. Cutting machine according to one of claims 5 or 6,
**characterized in that**
the longitudinal press drive (6) and/or the cross press drive (7) comprises a ball screw or a threaded spindle (6c, 7c), with the aid of which the at least one push rod (6b, 7b) can be moved in the pressing direction (10, 11.1), in particular relative to the at least one guide rod (6e, 7e) running parallel thereto.

8. Cutting machine according to one of claims 5 - 7,
**characterized in that**
- the cross press drive (7) and/or the longitudinal press drive (6) are present only at the cutting position (12),
- in particular the push rods (6b, 7b) can be retracted into the interior of the forming channel (1U) with their front area, in particular along the longitudinal center plane (10").

9. Cutting machine according to any of the preceding claims,
**characterized in that**
the blade (3) is
- either a linearly movable blade (3), in particular an endless belt-shaped blade or a finite plate-shaped blade (3)
- or the blade (3) is a rotating blade (3), which in particular rotates about a blade axis (3') running parallel to the axial direction (10) and in particular has a circular circumference, which is formed as a blade-edge (3a),

10. Cutting machine according to any of the preceding claims,
**characterized in that**
a stop element (14), in particular a stop plate (14), is provided for the loaf (100), which stop element (14)
- is arranged with its stop plane (14') transverse, in particular perpendicular, to the axial direction (10),
- can be adjusted in its axial distance (A) in front of the blade end (2a) of the forming tube (1)
- is coupled, in particular releasably coupled, to the blade axis (3').

11. Cutting machine according to any of the preceding claims,
**characterized in that**
- the stop element (14) is adjustable relative to the blade (3) not only in the axial direction (10) but also in its radial distance from the blade axis (3'). and/or
- the stop element (14) can be decoupled from the blade axis (3') and/or the cutter (3), in particular automatically at a certain position relative to the blade axis (3').

12. Cutting machine according to one of claims 5-11,
**characterized in that**
- the respective longitudinal press stamp (4.1 - 4.5) is detachably fastened to the longitudinal press drive (6), in particular to its push rod (6b), and
- in particular a respective longitudinal press stamp (4.1 - 4.6) matching one of the adjustable trough widths (B) is detachably arranged on or in a rotatable longitudinal stamp turret (13),
- wherein the longitudinal stamp turret (13) can be rotated in a controlled manner about a shift axis (13') parallel to the axial direction (10) of the forming tube (1) and spaced therefrom.

13. **Method** of slicing a loaf (100) with a slicing machine according to one of the preceding claims
**characterized in that**
for the transverse pressing
- one of several cross press stamps (5.1 - 5.6) is selected,
- coupled to the cross press drive (7),
- inserted into the single forming tube channel (1U) present, and
- the inner clear width of which is brought to the width of the inserted cross press stamp (5.1).

14. Method according to claim 13,
**characterized in that**
a cross press stamp (5.1) brought into the cutting position (12) is brought into contact with the cross press drive (7) by means of the longitudinal press drive (6), in particular is displaced onto the guide (22) of the cross press drive (7).

15. Method according to claim 14,
**characterized in that**
for gripping and displacing the cross press stamp (5.1) brought into the cutting position (12), a driver (24) is detachably arranged on the longitudinal stamp turret (13), which driver is coupled by the push rod (6b) of the longitudinal press drive (6) and is used for gripping the cross press stamp (5.1).

16. Method according to claim 13, 14 or 15,
**characterized in that**
for the cutting of cubes
- the forming tube channel (1U) and in particular also a cross press stamp (5.1) inserted therein is moved away from the blade plane, and
- a cube grid (16) is inserted into the resulting intermediate space, in particular is fastened to the lower end (1a) of the forming tube channel (1U) on the cutting side,
- in particular the forming tube channel (1U) is moved away from the blade plane (3') by means of the longitudinal press drive (6).

## Revendications

1. Machine de coupe pour découper une meule (100) de matériau élastique en tranches (101), comprenant
- un châssis de base (17),
- une goulotte (1U) en forme de tube fixée dans le châssis de base (17) et s'étendant dans la direction axiale (10), avec un côté longitudinal ouvert et un espace creux de goulotte (1U') ouvert des deux côtés sur le côté frontal,
- au moins un poinçon de compression transversale (5.1 - 5.6), qui s'adapte dans le côté ouvert de la goulotte de tube de formage (1U) pour former un tube de formage (1),
- un entraînement de compression longitudinale (6) positionné en alignement avec le tube de formage (1), qui peut appliquer une force dans la direction axiale (10) pour l'introduction axiale d'un des plusieurs poinçons de compression longitudinale (4.1 - 4.5) dans le tube de formage (1) à partir de l'extrémité arrière (1b) et la poussée vers l'avant ainsi que la compression longitudinale de la meule (100) qui s'y trouve en direction de l'extrémité de coupe (1a) du tube de formage (1),
- un dispositif de coupe (2) avec un couteau (3), qui est disposé devant l'extrémité de coupe (1a) du tube de formage (1) et qui peut être déplacé dans une direction transversale (11) par rapport au tube de formage (1),
**caractérisé en ce que**
- la largeur (B) de la goulotte de tube de formage (1U) peut être modifiée,
- plusieurs poinçons de compression transversale (5.1 - 5.6) de différentes largeurs (b1 - b5) sont présents, qui peuvent être introduits dans la section transversale ouverte de la goulotte de tube de formage (1U),
- un entraînement de compression transversale (7) est présent pour déplacer un poinçon de compression transversale (5.1 - 5.6) dans le côté longitudinal ouvert de la goulotte de tube de formage (1U) dans une première direction transversale (11.1), la direction de compression transversale (11.1).

2. Machine de coupe selon la revendication 1,
**caractérisé en ce que**
- la largeur (B) de l'espace creux de goulotte (1U') peut être modifiée en déplaçant au moins l'une des deux parois latérales (1U1, 1U2) de la goulotte de tube de formage (1U) dans une deuxième direction transversale (11.2) perpendiculairement à un plan médian longitudinal (10") de la goulotte de tube de formage (1U), notamment le long d'un fond (1U3) de la goulotte de tube de formage (1U).

3. Machine de coupe selon l'une des revendications précédentes, **caractérisée en ce que**
- l'entraînement de compression longitudinale (6) peut être couplé et découplé avec l'un des poinçons de compression longitudinale (4.1 - 4.5)
et/ou
- l'entraînement de compression transversale (7) peut être couplé et découplé avec l'un des poinçons de compression transversale (5.1 - 5.6).

4. Machine de coupe selon l'une des revendications précédentes, **caractérisée en ce que**
- les poinçons de compression transversale (5.1 - 5.6) sont disposés de manière amovible sur ou dans une tourelle de poinçons transversaux (23) rotative,
- dans lequel la tourelle de poinçons transversaux (23) peut être commandée en rotation autour d'un axe de rotation (23') parallèle à la direction axiale (10) et espacé de celle-ci.

5. Machine de coupe selon la revendication 4,
**caractérisé en ce que**
- la tourelle de poinçons transversaux (23) est décalée dans la direction axiale (10) par rapport à la goulotte de tube de formage (1U),
- la tourelle de poinçons transversaux (23) présente, pour chaque poinçon de compression transversale (5.1 - 5.6), un guidage (21.1 - 21.6) respectif s'étendant dans la direction longitudinale (10) et l'entraînement de compression transversale (7) présente un guidage (22) s'étendant dans la direction longitudinale (10) pour un poinçon de compression transversale (5.1 - 5.6),
- dans lequel le guidage (22) sur l'entraînement de compression transversale (7) peut être amené dans une position alignée avec le guidage (21.1 - 21.6) de la tourelle de poinçons transversaux (23) se trouvant dans la position de coupe (12),
- l'entraînement de compression longitudinale (6), en particulier une tige de poussée (6b) de l'entraînement de compression longitudinale (6), comprend un entraîneur (24) mobile dans la direction axiale (10), qui peut être couplé, en particulier par déplacement dans une direction transversale (11), avec le poinçon de compression transversale (5.1 - 5.6) se trouvant dans la position de coupe (12) dans la tourelle de poinçons transversaux (23).

6. Machine de coupe selon l'une des revendications précédentes, **caractérisé en ce que**
- l'entraînement de compression longitudinale (6) et/ou l'entraînement de compression transversale (7) et/ou le couteau (3) sont commandés par la force dans leur mouvement,
- de préférence, seul l'entraînement de compression longitudinale (6) et/ou l'entraînement de compression transversale (7) est commandé par la force.

7. Machine de coupe selon l'une des revendications 5 ou 6,
**caractérisé en ce que**
l'entraînement de compression longitudinale (6) et/ou l'entraînement de compression transversale (7) comprend une vis à billes ou une vis filetée (6c, 7c) à l'aide de laquelle ladite au moins une tige de poussée (6b, 7b) peut être déplacée dans la direction de compression (10, 11.1), en particulier par rapport à ladite au moins une tige de guidage (6e, 7e) s'étendant parallèlement à celle-ci.

8. Machine de coupe selon l'une des revendications 5 à 7,
**caractérisé en ce que**
- l'entraînement de compression transversale (7) et/ou l'entraînement de compression longitudinale (6) n'est présent qu'à la position de coupe (12),
- notamment que les tiges de poussée (6b, 7b) peuvent être introduites par leur partie avant à l'intérieur de la goulotte de tube de formage (1U), notamment le long du plan médian longitudinal (10").

9. Machine de coupe selon l'une des revendications précédentes,
**caractérisée en ce que**
le couteau (3) est
- soit un couteau (3) mobile linéairement, notamment un couteau (3) en forme de bande sans fin ou un couteau (3) en forme de plaque sans fin,
- soit le couteau (3) est un couteau rotatif (3), qui tourne en particulier autour d'un axe de couteau (3') parallèle à la direction axiale (10) et qui présente en particulier une périphérie circulaire qui est conçue comme un tranchant (3a).

10. Machine de coupe selon l'une des revendications précédentes,
**caractérisée en ce que**
il existe un élément de butée (14), en particulier une plaque de butée (14), pour la meule (100), qui
- est disposé avec son plan de butée (14') transversalement, en particulier perpendiculairement, à la direction axiale (10),
- est réglable dans sa distance axiale (A) devant l'extrémité de coupe (2a) du tube de formage (1),
- est couplée, notamment de manière amovible, à l'axe de couteau (3').

11. Machine de coupe selon l'une des revendications précédentes, **caractérisée en ce que**
- l'élément de butée (14) est réglable par rapport au couteau (3), non seulement dans la direction axiale (10), mais aussi dans sa distance radiale par rapport à l'axe de couteau (3')
et/ou
- l'élément de butée (14) peut être découplé de l'axe de couteau (3') et/ou du couteau (3), notamment automatiquement dans une position déterminée par rapport à l'axe de couteau (3').

12. Machine de coupe selon l'une des revendications 5 à 11,
**caractérisé en ce que**
- le poinçon de compression longitudinale respectif (4.1-4.5) est fixé de manière amovible à l'entraînement de compression longitudinale (6), en particulier à sa tige de poussée (6b) et
- en particulier un poinçon de compression longitudinale (4.1 - 4.6) adapté à l'une des largeurs de goulotte de formage (B) réglables est disposé de manière amovible sur ou dans une tourelle de poinçons longitudinaux (13) rotative,
- dans lequel la tourelle de poinçons longitudinaux (13) peut être tournée de manière commandée autour d'un axe de commutation (13') parallèle à la direction axiale (10) du tube de formage (1) et espacé de celle-ci.

13. Procédé de découpage d'une meule (100) avec une machine de coupe selon l'une des revendications précédentes,
**caractérisé en ce que,**
pour la compression transversale,
- l'un des plusieurs poinçons de compression transversale (5.1 - 5.6) est sélectionné,
- couplé à l'entraînement de compression transversale (7) et
- introduit dans la seule goulotte de tube de formage (1U) existante et
- leur largeur intérieure libre est amenée à la largeur du poinçon de compression transversale (5.1) rentré.

14. Procédé selon la revendication 13,
**caractérisé en ce que**
un poinçon de compression transversale (5.1) amené dans la position de coupe (12) est amené en contact avec l'entraînement de compression transversale (7) au moyen de l'entraînement de compression longitudinale (6), en particulier est déplacé sur le guidage (22) de l'entraînement de compression transversale (7).

15. Procédé selon la revendication 14,
**caractérisé en ce que**
pour la saisie et le déplacement du poinçon de compression transversale (5.1) amené dans la position de coupe (12), un entraîneur (24) est disposé de manière amovible sur la tourelle de poinçons longitudinaux (13), lequel est couplé par la tige de poussée (6b) de l'entraînement de compression longitudinale (6) et est utilisé pour la saisie du poinçon de compression transversale (5.1).

16. Procédé selon la revendication 13, 14 ou 15,
**caractérisé en ce que**
pour la découpe de cubes
- la goulotte de tube de formage (1U) et en particulier aussi un poinçon de compression transversale (5.1) introduit dans celle-ci sont éloignés du plan de couteau, et
- une grille à cubes (16) est insérée dans l'espace intermédiaire qui en résulte, en particulier fixée à l'extrémité inférieure (1a), côté coupe, de la goulotte de tube de formage (1U),
- en particulier la goulotte de tube de formage (1U) est éloignée du plan de couteau (3') au moyen de l'entraînement de compression longitudinale (6).
